Europäisches Patentamt

European Patent Office

Office européen des brevets

(11) Publication number: **0 664 477 A2**

# EUROPEAN PATENT APPLICATION

(21) Application number: 95100918.2

(51) Int. Cl.⁶: **G03B 21/00**

(22) Date of filing: **24.01.95**

(30) Priority: **24.01.94 JP 6041/94**
**12.07.94 JP 160346/94**
**15.07.94 JP 164325/94**
**18.07.94 JP 165616/94**

(43) Date of publication of application:
**26.07.95 Bulletin 95/30**

(84) Designated Contracting States:
**DE FR GB**

(71) Applicant: **PIONEER ELECTRONIC**
**CORPORATION**
**No. 4-1, Meguro 1-chome**
**Meguro-ku**
**Tokyo-to (JP)**

(72) Inventor: **Nitta, Akira, c/o Pioneer Elec. Corp.**
**Ohmori Works,**
**No. 15-5, Ohmorinishi 4-chome**
**Ohta-ku,**
**Tokyo-to (JP)**
Inventor: **Yoshioka, Takayuki, c/o Pioneer**
**Elec. Corp.**
**Ohmori Works,**
**No. 15-5, Ohmorinishi 4-chome**
**Ohta-ku,**
**Tokyo-to (JP)**
Inventor: **Wagatsuma, Saori, c/o Pioneer Elec.**
**Corp.**
**Ohmori Works,**
**No. 15-5, Ohmorinishi 4-chome**

**Ohta-ku,**
**Tokyo-to (JP)**
Inventor: **Takahashi, Toshie, c/o Pioneer Elec.**
**Corp.**
**Ohmori Works,**
**No. 15-5, Ohmorinishi 4-chome**
**Ohta-ku,**
**Tokyo-to (JP)**
Inventor: **Hirobe, Toshinori, c/o Pioneer Elec.**
**Corp.**
**Ohmori Works,**
**No. 15-5, Ohmorinishi 4-chome**
**Ohta-ku,**
**Tokyo-to (JP)**
Inventor: **Ozaki, Yukio, c/o Pioneer Elec. Corp.**
**Ohmori Works,**
**No. 15-5, Ohmorinishi 4-chome**
**Ohta-ku,**
**Tokyo-to (JP)**
Inventor: **Akagi, Manabu, c/o Pioneer Elec.**
**Corp.**
**Ohmori Works,**
**No. 15-5, Ohmorinishi 4-chome**
**Ohta-ku,**
**Tokyo-to (JP)**

(74) Representative: **Hertel, Werner, Dipl.-Phys.**
**Müller-Boré & Partner**
**Patentanwälte**
**Postfach 26 02 47**
**D-80059 München (DE)**

(54) **Apparatus for observing magnified image.**

(57) An apparatus for observing a magnified image characterized in that said apparatus comprises : a first concave mirror (2) having a radius of curvature R, and a focal length f being equal to | R / 2 |; and a display unit (14) having a screen (1) being opposite to the first concave mirror and being arranged such that $X \geq 1.2f$, in which X is a distance between a center (25) of the first concave mirror and a point, at which a line (24) passing through a center of the screen and extending transverse to the screen intersects an optical axis (22) of the first concave mirror.

EP 0 664 477 A2

# F I G.1

20:OBSERVER

4:OBSERVER'S EYE    2:CONCAVE MIRROR

24:CENTRAL
    LINE

23

25

22:OPTICAL AXIS

1:SCREEN

14:DISPLAY UNIT    10:APPARATUS

BACKGROUND OF THE INVENTION

1. Field of the Invention

The present invention relates to an apparatus for observing a magnified image, wherein the apparatus is provided with one or two concave mirrors.

2. Background of the Related Art

There is an apparatus for magnifying an image displayed on a screen of a display unit and for observing the magnified image by using a concave mirror, which is used for a video game apparatus.

The apparatus includes a concave mirror and a display unit having a screen. A reflection surface of the concave mirror is opposite to the screen of the display unit and an observer. The display unit and the concave mirror are arranged such that an angle formed where a line passing between an observer's eye and a center of the concave mirror intersects an optical axis of the concave mirror is equal to an angle formed where a line passing between the center of the concave mirror and a center of the screen intersects the optical axis. Therefore, the observer can observe the magnified image behind the concave mirror as a virtual image.

However, the image magnified by the apparatus includes Keyston strain, and a aspect ratio of the magnified image is different from that of an image displayed on the screen.

Further, a reflection angle of an optical path from the screen to the observer's eye is restricted in a case where the apparatus is provided with a concave mirror. Therefore, the image may not be sufficiently magnified, the magnified image includes a little strain, and downsizing of the apparatus is prevented.

The magnified image includes Bow strain in a case where the apparatus is provided with the screen having a great radius of curvature or the concave mirror having a great radius of curvature. Additionally, an white and black image may be magnified by the apparatus in spite of color picture being displayed on the screen, since the directivity of the screen is narrow in a case where the apparatus is provided with a flat screen such as a liquid crystal display.

SUMMARY OF THE INVENTION

Accordingly, a first object of the present invention is to provide an apparatus capable of observing a magnified image without including a lot of strain.

A second object of the present invention is to provide an apparatus for observing a magnified image capable of sufficiently magnifying the image without including a lot of strain.

A third object of the present invention is to provide an apparatus capable of observing a color magnified image in a case where the apparatus is provided with a flat screen such as a liquid crystal display or in a case where the apparatus is provided with the concave mirror having a great radius of curvature.

According to the present invention, the above mentioned first object can be achieved by an apparatus for observing a magnified image including : a first concave mirror having a radius of curvature R, and a focal length f being equal to $| R / 2 |$; and a display unit having a screen being opposite to the first concave mirror and being arranged such that $X1 \geq 1.2f$, in which $X1$ is a distance between a center of the first concave mirror and a point, at which a line passing through a center of the screen and extending transverse to the screen intersects an optical axis of the first concave mirror.

Thus, the magnified image can be observed without including Keyston strain, and a difference in an aspect ratio between the magnified image and the image displayed on the screen can be decreased.

Wherein the first concave mirror may have an aspherical surface represented by coordinates $(x,y,z)$, in which

$$z = C \cdot H^2/(1-(K+1)C^2 \cdot H^2)^{1/2},$$
$$C = 1/R,$$
$$H = (x^2+y^2)^{1/2},$$
$$-3.0 \leq K \leq 1.0, \text{ and}$$

in which $(x,y)$ is coordinates on a plane passing through the center of the first concave mirror and being transverse to the optical axis, z is coordinate on the optical axis, and R is a paraxial radius of curvature of the first concave mirror.

According to the present invention, the above mentioned second object can be achieved by the apparatus further including a second concave mirror being opposite to the first concave mirror. Thus, since the apparatus is provided with two concave mirrors through an optical path from the screen to the observer, the image can be magnified without including much strain.

According to the present invention, the above mentioned third object can be achieved by the apparatus further including a lens, disposed adjacent to the screen of the display unit, for refracting an optical path. Thus, since the apparatus is provided with a lens between the screen and the first concave mirror, the directivity of the flat screen can be changed, and therefore the color image can be magnified by the apparatus.

The nature, utility, and further features of this invention will be more clearly apparent from the following detailed description with respect to preferred embodiments of the invention when read in conjunction with the accompanying drawings briefly described below.

BRIEF DESCRIPTION OF THE DRAWINGS

FIG. 1 is a schematic diagram showing a first aspect of an apparatus for observing a magnified image according to the present invention;

FIG. 2 is a schematic diagram showing a second aspect of a apparatus for observing a magnified image according to the present invention;

FIG. 3 is a schematic diagram showing an arrangement of the display unit, a first concave mirror, and observer;

FIG. 4 is a schematic diagram showing definitions of symbols;

FIG. 5 is a schematic diagram showing an image screen which is magnified by the apparatus 10 according to the embodiment 1;

FIG. 6 is a schematic diagram showing an image screen which is magnified by the apparatus 10 according to the embodiment 2;

FIG. 7 is a schematic diagram showing an image screen which is magnified by the apparatus 10 according to the embodiment 3;

FIG. 8 is a schematic diagram showing an image screen which is magnified by the apparatus 10 according to the embodiment 4;

FIG. 9 is a schematic diagram showing an image screen which is magnified by the apparatus 10 according to the embodiment 5;

FIG. 10 is a schematic diagram showing an image screen which is magnified by the apparatus 10 according to the embodiment 6;

FIG. 11 is a schematic diagram showing an image screen which is magnified by the apparatus 10 according to the embodiment 7;

FIG. 12 is a schematic diagram showing an image screen which is magnified by the apparatus 10 according to the embodiment 8;

FIG. 13 is a schematic diagram showing an image screen which is magnified by the apparatus 10 according to the embodiment 9;

FIG. 14 is a schematic diagram showing an image screen which is magnified by the apparatus 10 according to the embodiment 10;

FIG. 15 is a schematic diagram showing an image screen which is magnified by the apparatus 10 according to the embodiment 11;

FIG. 16 is a schematic diagram showing an image screen which is magnified by the apparatus 10 according to the embodiment 12;

FIG. 17 is a schematic diagram showing a third aspect of an apparatus for observing a magnified image according to the present invention;

FIG. 18 is a schematic diagram showing a fourth aspect of a apparatus for observing a magnified image according to the present invention;

FIG. 19 is a schematic diagram showing an arrangement of the screen 1 of the display unit 14, the first concave mirror 2, the second concave mirror 3 and the observer's eyes 4;

FIG. 20 is a schematic diagram showing an arrangement of the screen 1 of the display unit 14, the first concave mirror 2, the second concave mirror 3 and the observer's eyes 4 in the embodiment 13;

FIG. 21 is a schematic diagram showing an image screen magnified by the apparatus 10 according to the embodiment 13;

FIG. 22 is a schematic diagram showing an arrangement of the screen 1 of the display unit 14, the first concave mirror 2, the second concave mirror 3 and the observer's eyes 4 in the embodiment 14;

FIG. 23 is a schematic diagram showing an image screen magnified by the apparatus 10 according to the embodiment 14;

FIG. 24 is a schematic diagram showing an arrangement of the screen 1 of the display unit 14, the first concave mirror 2, the second concave mirror 3 and the observer's eyes 4 in the embodiment 15;

FIG. 25 is a schematic diagram showing an image screen magnified by the apparatus 10 according to the embodiment 15;

FIG. 26 is a schematic diagram showing an arrangement of the screen 1 of the display unit 14, the first concave mirror 2, the second concave mirror 3 and the observer's eyes 4 in the embodiment 16;

FIG. 27 is a schematic diagram showing an image screen magnified by the apparatus 10 according to the embodiment 16;

FIG. 28 is a schematic diagram showing an arrangement of the screen 1 of the display unit 14, the first concave mirror 2, the second concave mirror 3 and the observer's eyes 4 in the embodiment 17;

FIG. 29 is a schematic diagram showing an image screen magnified by the apparatus 10 according to the embodiment 17;

FIG. 30 is a schematic diagram showing an arrangement of the screen 1 of the display unit 14, the first concave mirror 2, the second concave mirror 3 and the observer's eyes 4 in the embodiment 18;

FIG. 31 is a schematic diagram showing an image screen magnified by the apparatus 10 according to the embodiment 18;

FIG. 32 is a schematic diagram showing an arrangement of the screen 1 of the display unit 14, the first concave mirror 2, the second concave mirror 3 and the observer's eyes 4 in the embodiment 19;

FIG. 33 is a schematic diagram showing an image screen magnified by the apparatus 10 according to the embodiment 19;

FIG. 34 is a schematic diagram showing an arrangement of the screen 1 of the display unit 14, a convex lens 11, the first concave mirror 2 and the observer's eyes 4 in the embodiment 20;

FIG. 35 is a schematic diagram showing an image screen magnified by the apparatus 10 according to the embodiment 20;

FIG. 36 is a schematic diagram showing an image screen magnified by the apparatus 10 in a case where the lens 11 is removed from that of the embodiment 20;

FIG. 37 is a schematic diagram showing an arrangement of the screen 1 of the display unit 14, a convex lens 11, a first concave mirror 2 and the observer's eyes 4 in the embodiment 21;

FIG. 38 is a schematic diagram showing an image screen magnified by the apparatus 10 according to the embodiment 21;

FIG. 39 is a schematic diagram showing an image screen magnified by the apparatus 10 in a case where the lens 11 is removed from that of the embodiment 21;

FIG. 40 is a schematic diagram showing an arrangement of the screen 1 of the display unit 14, a linear Fresnel lens 11, a first concave mirror 2 and the observer's eyes 4 in the embodiment 24;

FIG. 41a is a sectional view showing a linear Fresnel lens 11 used in the apparatus 10 of this embodiment 24;

FIG. 41b is a partially sectional view showing a portion A of FIG. 41a;

FIG. 42 is a schematic diagram showing an image screen magnified by the apparatus 10 according to the embodiment 24;

FIG. 43 is a schematic diagram showing an arrangement of the screen 1 of the display unit 14, a linear Fresnel lens 11, the first concave mirror 2 and the observer's eyes 4 in the embodiment 25;

FIG. 44 is a schematic diagram showing an image screen magnified by the apparatus 10 according to the embodiment 25;

FIG. 45 is a schematic diagram showing an arrangement of the screen 1 of the display unit 14, the first concave mirror 2, the second concave mirror 3 and the observer's eyes 4 in the embodiment 26;

FIG. 46 is a schematic diagram showing an image screen magnified by the apparatus 10 according to the embodiment 26;

FIG. 47 is a schematic diagram showing an arrangement of the screen 1 of the display unit 14, the first concave mirror 2, the second concave mirror 3 and the observer's eyes 4 in the embodiment 27; and

FIG. 48 is a schematic diagram showing an image screen magnified by the apparatus 10 according to the embodiment 27.

DESCRIPTION OF THE PREFERRED EMBODIMENTS

A preferred embodiment according to the present invention will now be described below with reference to the accompanying drawings. It should be noted that same reference numerals are used to denote same elements throughout the specification.

I) In the following embodiments 1 - 12, one concave mirror is used

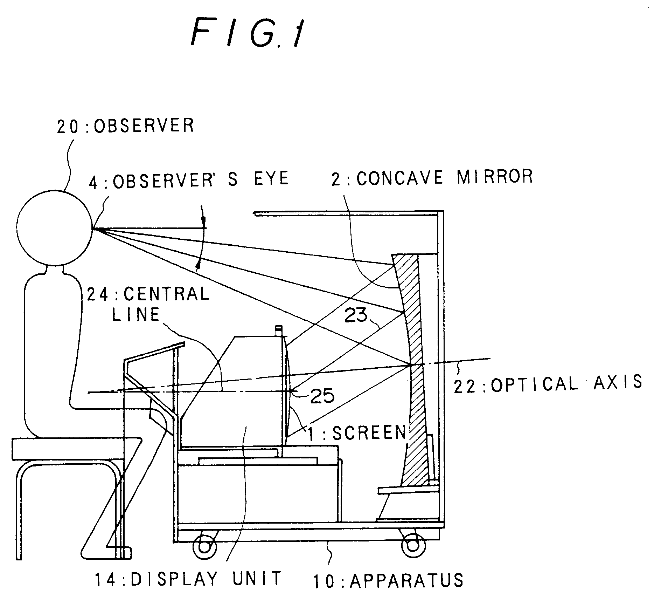

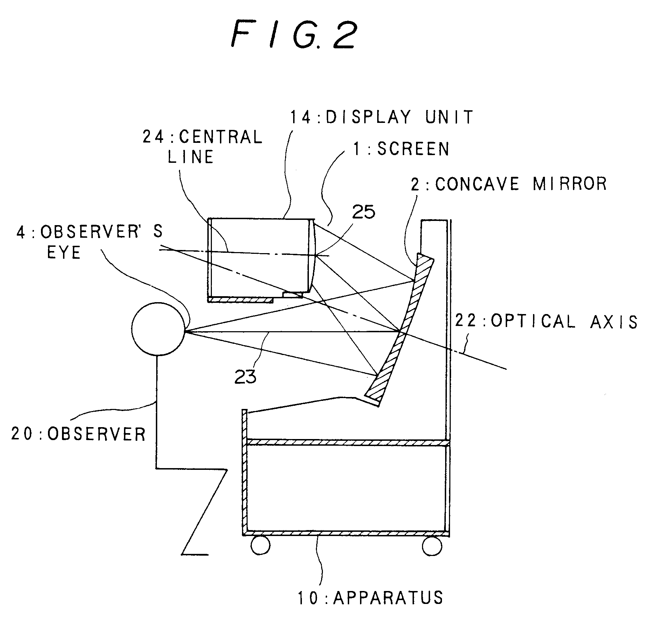

FIG. 1 is a schematic diagram showing a first aspect of an apparatus for observing a magnified image according to the present invention, and FIG. 2 is a schematic diagram showing a second aspect of a apparatus for observing a magnified image according to the present invention. The apparatus shown in FIG. 2 is the same as that shown in FIG. 1 except that in the first aspect of the apparatus shown FIG. 1, a display unit 14 is provided under observer's eyes 4, whereas,in the second aspect of the apparatus shown FIG. 2, the display unit 14 is provided above observer's eyes 4.

Referring to FIGs. 1 and 2, the apparatus 10 according to the present invention includes a first concave mirror 2 and the display unit 14 having a screen 1. A reflection surface of the first concave mirror 2 is opposite to the screen 1 of the display unit 14 and an observer 20. The display unit 14 and the first concave mirror 2 are arranged such that a optical axis 22 of the first concave mirror 2 intersects, with a predetermined angle, a central line 24 which passes through a center 25 of the screen 1 and extends transverse to the screen, and additionally, a line 23 from the center 25, which is reflected by the first concave mirror 2, to the observer's eyes 4 does not accord with the optical axis 22 of the first concave mirror 2.

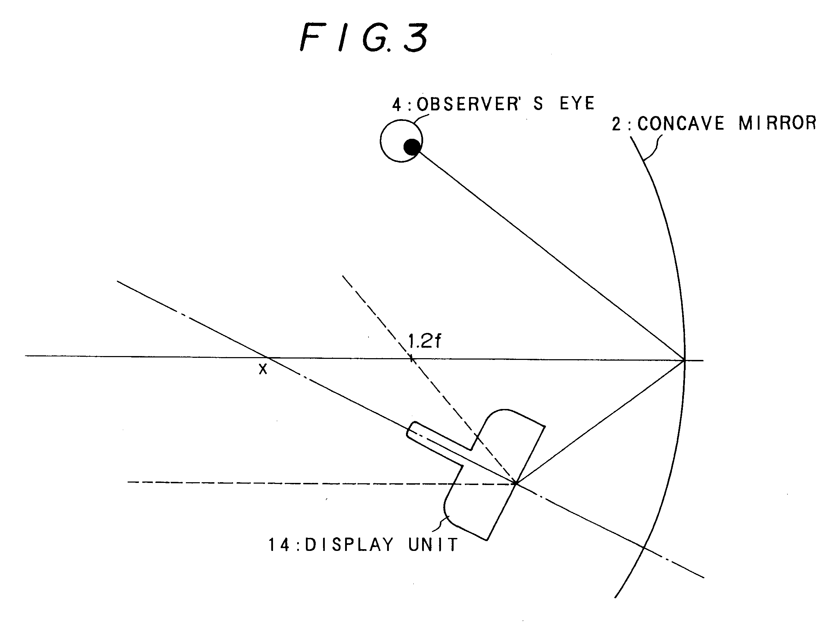

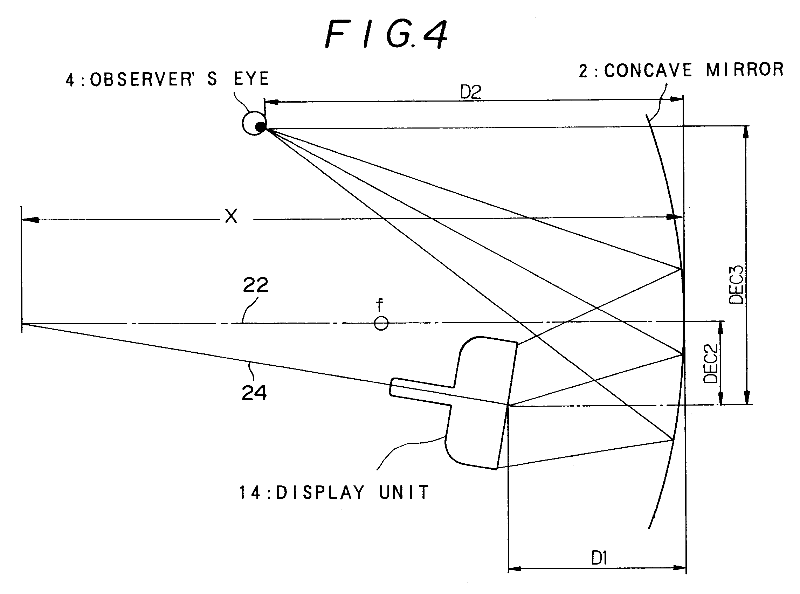

Referring to FIGs. 1 and 2 showing the apparatus according to the present invention, an arrangement of the display unit 14, the first concave mirror 2, and the observer's eye 4 is schematically shown in FIG. 3. In the following description made with reference to FIGs 1 - 48, it should be noted that image quality is judged in accordance with aspect ratio, Bow strain and Keyston strain and images displayed on the screen 1 in FIGs 4 - 48 are all evaluated with reference of the aspect ratio of 4 : 3. Wherein, the Bow strain is defined as a tangent of an angle formed where a horizontal line intersects a horizontal line of the screen flame magnified by the apparatus 10, and the Keyston strain is defined as a tangent of an angle formed where a vertical line intersects a vertical line of the screen flame magnified by the apparatus 10.

In the following embodiments, if the apparatus 10 is provided with the first concave mirror 2 having an aspherical surface, coordinates (x,y,z) of the aspherical surface represented by

$$z = C \cdot H^2/(1-(K+1)C^2 \cdot H^2)^{1/2},$$
$$C = 1/R, \text{ and}$$
$$H = (x^2 + y^2)^{1/2}.$$

Wherein (x,y) is coordinates on a plane passing through the center of the first concave mirror 2 and being transverse to the optical axis 22 of the first concave mirror 2, z is coordinate on the optical axis 22, R is a paraxial radius of curvature of the first concave mirror 2, and K is a coefficient of aspherical surface of the first concave mirror 2.

In the following embodiment 1 - 12,

symbol " R1 " represents a radius of curvature of the screen 1,

symbol " K1 " represents a coefficient of aspherical surface of the screen 1,

symbol " R2 " represents a radius of curvature of the first concave mirror 2, and

symbol " K2 " represents a coefficient of aspherical surface of the first concave mirror 2.

As is shown in FIG. 4, in the following embodiments,

symbol " D1 " represents a distance between a plane passing the center of the screen 1 and being transverse to the optical axis of the first concave mirror 2 and a plane passing the center of the first concave mirror 2 and transverse to the optical axis,

symbol " D2 " represents a distance between the plane passing the center of the first concave mirror 2 and being transverse to the optical axis of the first concave mirror 2 and a plane passing the center of the observer's eye 4 and transverse to the optical axis,

symbol " X " represents coordinates of a point , at which a line passing through the center 25 of the screen 1 and extending transverse to the screen 1 intersects the optical axis 22 of the first concave mirror 2,

symbol " f " represents a focal length of a first concave mirror 2,

symbol " DEC2 " represents a deviation of the center 25 from the optical axis 22, and

symbol " DEC3 " represents a deviation of the observer's eyes 4 from the optical axis 22 plus the DEC2.

In the following embodiments 1 - 12 made with reference to FIGs 1 to 16, it should be noted that same symbols are used to denote same elements.

A) In the following embodiments 1 - 3, the value " X " is changed.

EMBODIMENT 1

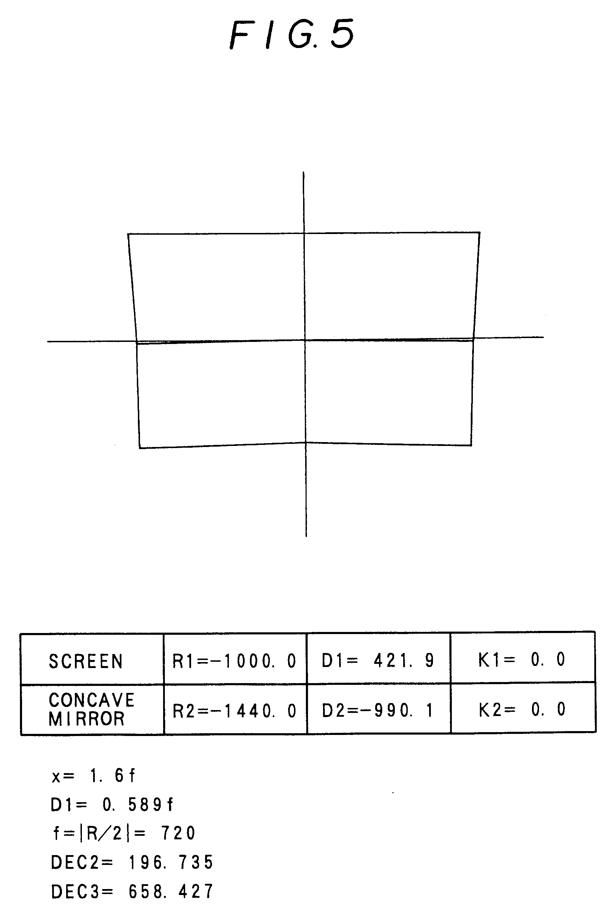

FIG. 5 shows an image screen which is magnified by the apparatus 10 according to the embodiment 1. The specification of the apparatus 10 according to the embodiment 1 is as follows:
R1 = -1000.0 mm
D1 = 421.9 mm
K1 = 0.0
R2 = -1440.0 mm
D2 = -990.1 mm
K2 = 0.0
X = 1.6f
D1 = 0.589f
f = | R2 / 2 | = 720 mm
DEC2 = 196.735 mm
DEC3 = 658.427 mm

In this embodiment, the coefficient of aspherical surface of the first concave mirror 2 is 0.0. This means that the reflection surface of the first concave mirror 2 is spherical. Additionally, X = 1.6f.

It is clear from FIG. 5 that the magnified image does not include strain and is recognized as natural. As a result, it is proved that the image magnified by the apparatus does not include the strain in a case where the apparatus is provided with the first concave mirror having a spherical reflection surface and X = 1.6f.

EMBODIMENT 2

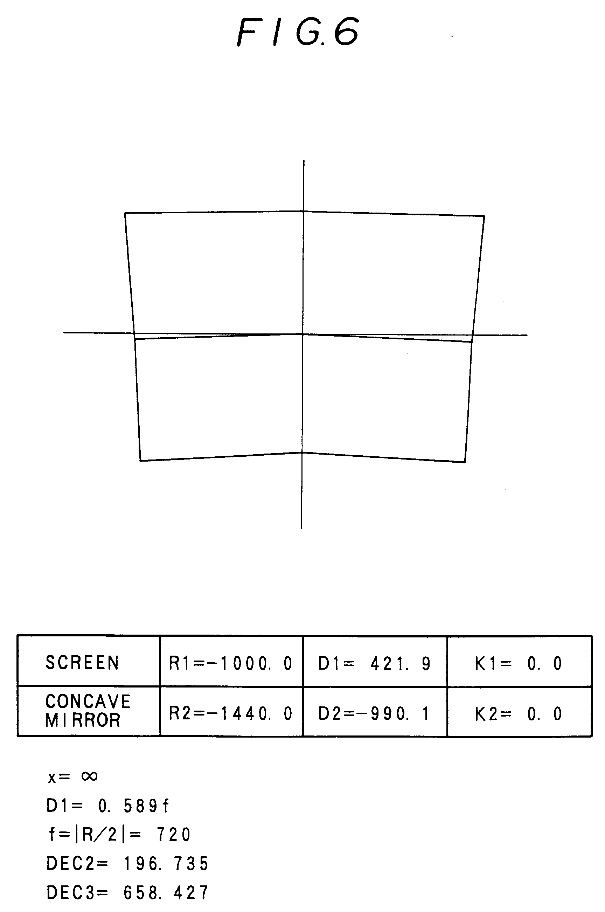

FIG. 6 shows an image screen which is magnified by the apparatus 10 according to the embodiment 2. The specification of the apparatus 10 according to the embodiment 2 is as follows:
R1 = -1000.0 mm
D1 = 421.9 mm
K1 = 0.0
R2 = -1440.0 mm
D2 = -990.1 mm
K2 = 0.0
X = infinite
D1 = 0.589f
f = | R2 / 2 | = 720 mm
DEC2 = 196.735 mm
DEC3 = 658.427 mm

In this embodiment, the coefficient of aspherical surface of the first concave mirror 2 is 0.0. This means that the reflection surface of the first concave mirror 2 is spherical. Additionally, X is infinite.

It is clear from FIG. 6 that the magnified image does not include strain and is recognized as natural. As a result, it is proved that the image magnified by the apparatus does not include the strain, in a case where the apparatus is provided with the first concave mirror having a spherical reflection surface and X is infinite. In the embodiment 2, an inclination of the display unit 14 is changed so that the value X may be changed from 1.6f to infinite.

## EMBODIMENT 3

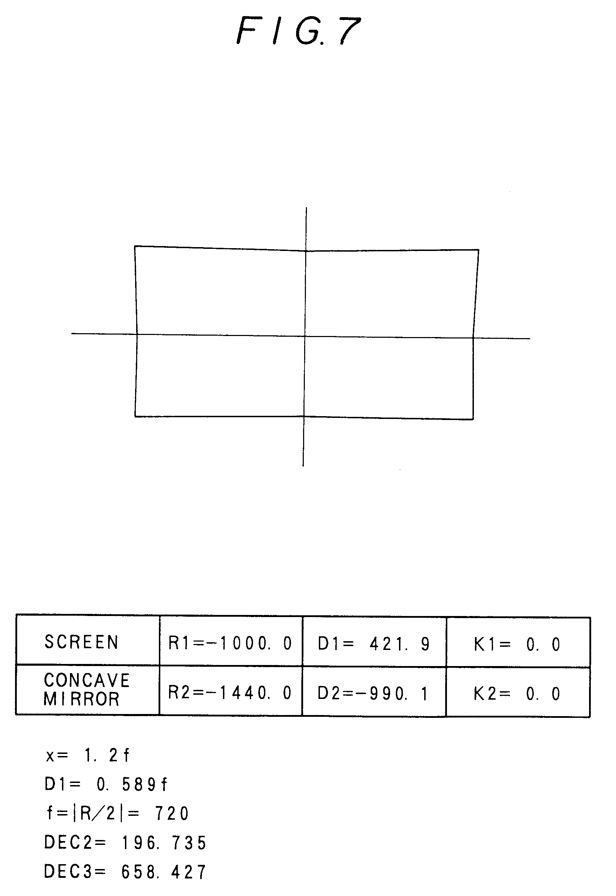

FIG. 7 shows an image screen which is magnified by the apparatus 10 according to the embodiment 3. The specification of the apparatus 10 according to the embodiment 3 is as follows:

R1 = -1000.0 mm
D1 = 421.9 mm
K1 = 0.0
R2 = -1440.0 mm
D2 = -990.1 mm
K2 = 0.0
X = 1.2f
D1 = 0.589f
f = | R2 / 2 | = 720 mm
DEC2 = 196.735 mm
DEC3 = 658.427 mm

In this embodiment, the coefficient of aspherical surface of the first concave mirror 2 is 0.0. This means that the reflection surface of the first concave mirror 2 is spherical. Additionally, X is 1.2f.

It is clear from FIG. 7 that the magnified image does not include strain and is recognized as natural. As a result, it is proved that the image magnified by the apparatus does not include the strain, in a case where the apparatus is provided with the first concave mirror having a spherical reflection surface and X is 1.2f. In the embodiment 3, an inclination of the display unit 14 is changed so that the value X may be changed from 1.6f to 1.2f.

However, as is clear from FIG. 6, an aspect ratio of the magnified image is about 2 : 1, in spite of the aspect ratio of screen 1 being 4 : 3. Therefore, the value " 1.2f " is the lower limit of the value " X ".

## Conclusion

It is proved from the embodiments 1 - 3 that the image magnified by the apparatus according to the present invention does not include the strain, in the case where the apparatus is provided with the first concave mirror having a spherical reflection surface and X is greater than 1.2f.

B) In the following embodiments 4 and 5, the coefficient of aspherical surface is changed.

## EMBODIMENT 4

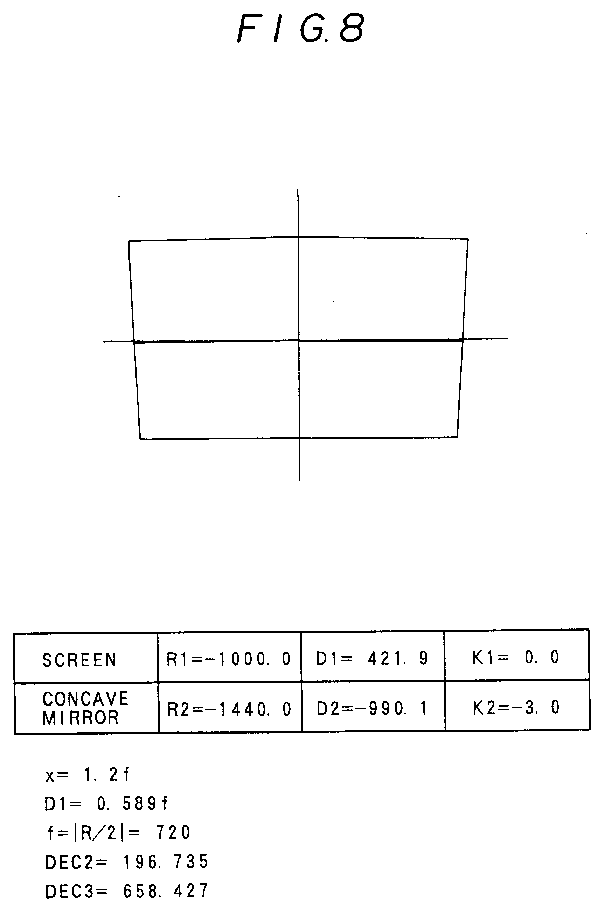

FIG. 8 shows an image screen which is magnified by the apparatus 10 according to the embodiment 4. The specification of the apparatus 10 according to the embodiment 4 is as follows:

R1 = -1000.0 mm
D1 = 421.9 mm
K1 = 0.0
R2 = -1440.0 mm
D2 = -990.1 mm
K2 = -3.0
X = 1.2f
D1 = 0.589f
f = | R2 / 2 | = 720 mm
DEC2 = 196.735 mm
DEC3 = 658.427 mm

In this embodiment, the coefficient of aspherical surface of the first concave mirror 2 is -3.0. This means that the reflection surface of the first concave mirror 2 is aspherical. Additionally, X is 1.2f.

It is clear from FIG. 8 that the magnified image does not include strain and is recognized as natural. Being compared with the magnified image of FIG. 6, that of FIG. 7 is greatly improved, therefore the image quality being tolerable. If the coefficient of aspherical is less than -3.0, Keyston strain and Bow strain appeared.

As a result, it is proved that the image being magnified by the apparatus of this embodiment does not include the strain, in a case where the apparatus is provided with the first concave mirror having an aspherical reflection surface, X is 1.2f and the coefficient of aspherical surface is -3.0.

## EMBODIMENT 5

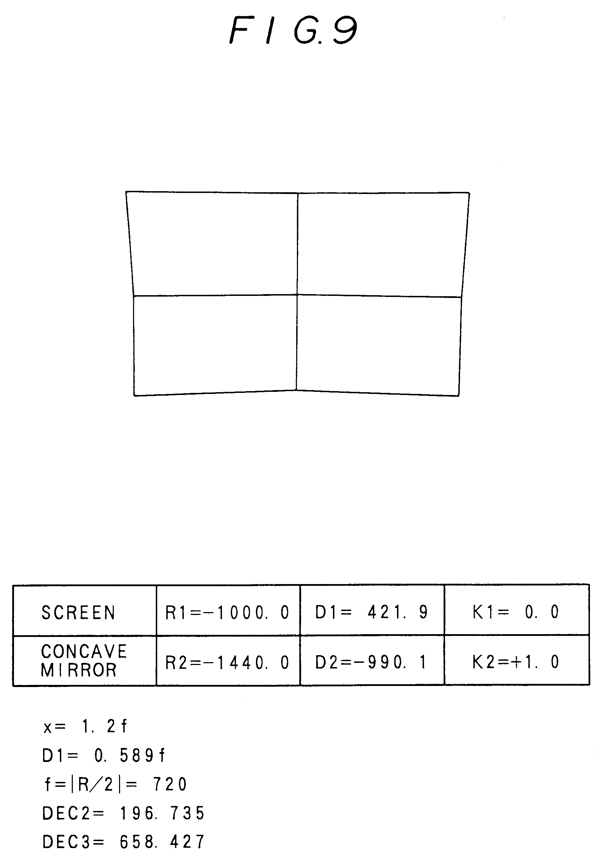

FIG. 9 shows an image screen which is magnified by the apparatus 10 according to the embodiment 5. The specification of the apparatus 10 according to the embodiment 5 is as follows:

R1 = -1000.0 mm
D1 = 421.9 mm
K1 = 0.0
R2 = -1440.0 mm
D2 = -990.1 mm
K2 = + 1.0
X = 1.2f
D1 = 0.589f
f = | R2 / 2 | = 720 mm
DEC2 = 196.735 mm
DEC3 = 658.427 mm

In this embodiment, the coefficient of aspherical surface of the first concave mirror 2 is + 1.0.

Therefore, the reflection surface of the first concave mirror 2 is aspherical. Additionally, X is 1.2f.

It is clear from FIG. 9 that the magnified image does not include strain and is recognized as natural.

As a result, it is proved that the image being magnified by the apparatus of this embodiment 5 does not include the strain, in a case where the apparatus is provided with the first concave mirror having an aspherical reflection surface, X is 1.2f and the coefficient of aspherical surface is +1.0. In this embodiment, the coefficient is changed from -3.0 to 1.0. Being compared with the magnified image of FIG. 7, in the image of FIG. 8, a little Pin strain is included. If the coefficient of aspherical surface is greater than +1.0, the Pin strain is increased, therefore, the image quality being not tolerable.

Conclusion

It is proved from embodiments 4 and 5 that the image magnified by the apparatus of the present invention does not include the strain, in the case where the apparatus is provided with the first concave mirror having a aspherical reflection surface, X is greater than 1.2f and the coefficient of aspherical surface is between -0.3 and +1.0.

C) In the following embodiments 6 - 10, the value D1 is changed.

EMBODIMENT 6

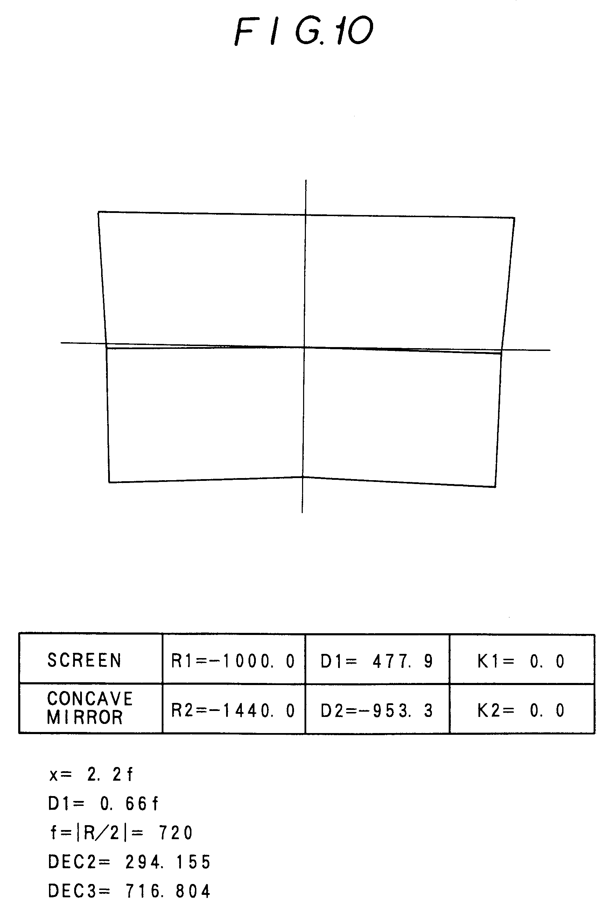

FIG. 10 shows an image screen which is magnified by the apparatus 10 according to the embodiment 6. The specification of the apparatus 10 according to the embodiment 6 is as follows:
R1 = -1000.0 mm
D1 = 477.9 mm
K1 = 0.0
R2 = -1440.0 mm
D2 = -953.3 mm
K2 = 0.0
X = 2.2f
D1 = 0.66f
f = | R2 / 2 | = 720 mm
DEC2 = 294.155 mm
DEC3 = 716.804 mm

It is clear from FIG. 10 that the magnified image does not include strain and is recognized as natural.

As a result, it is proved that the image magnified by the apparatus of this embodiment 6 does not include the strain, in a case where the apparatus is provided with the first concave mirror having a spherical reflection surface, X is 2.2f and D1 = 0.66f.

EMBODIMENT 7

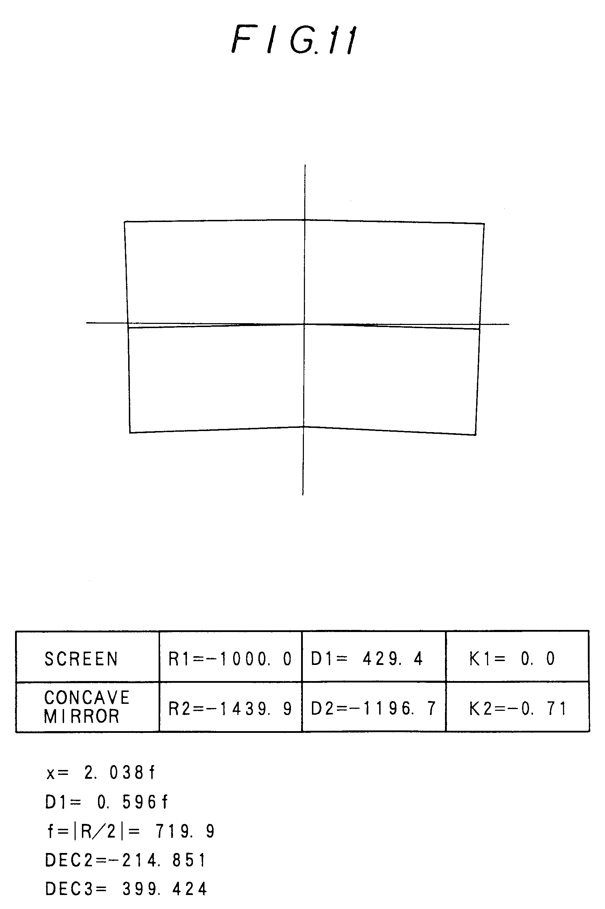

FIG. 11 shows an image screen which is magnified by the apparatus 10 according to the embodiment 7. The specification of the apparatus 10 according to the embodiment 7 is as follows:
R1 = -1000.0 mm
D1 = 429.4 mm
K1 = 0.0
R2 = -1439.9 mm
D2 = -1196.7 mm
K2 = -0.71
X = 2.038f
D1 = 0.596f
f = | R2 / 2 | = 719.9 mm
DEC2 = -214.851 mm
DEC3 = 399.424 mm

It is clear from FIG. 11 that the magnified image does not include strain and is recognized as natural.

As a result, it is proved that the image magnified by the apparatus of this embodiment 7 does not include the strain, in a case where the apparatus is provided with the first concave mirror having an aspherical reflection surface, X is 2.038f, D1 = 0.596f and the coefficient of aspherical surface is -0.71.

EMBODIMENT 8

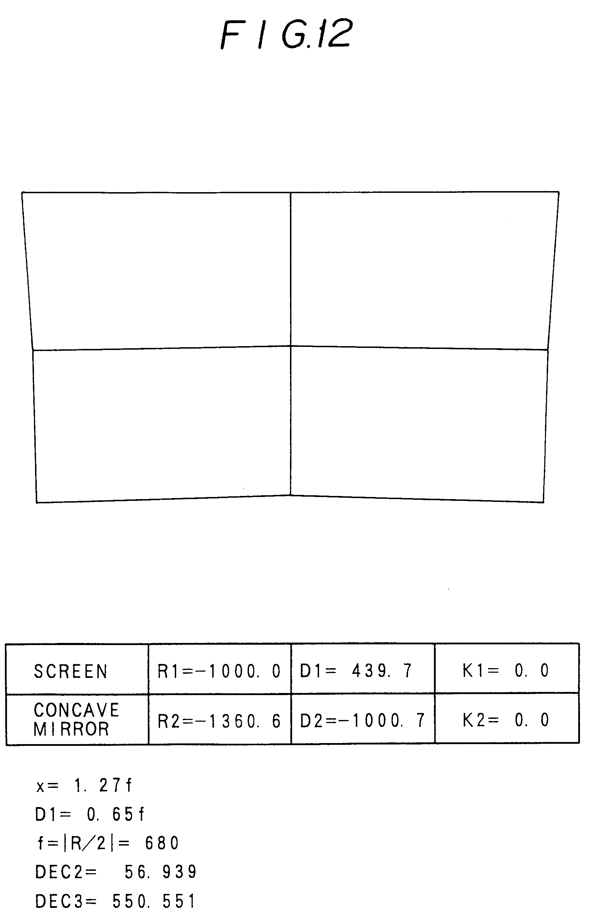

FIG. 12 shows an image screen which is magnified by the apparatus 10 according to the embodiment 8. The specification of the apparatus 10 according to the embodiment 8 is as follows:
R1 = -1000.0 mm
D1 = 439.7 mm
K1 = 0.0
R2 = -1360.6 mm
D2 = -1000.7 mm
K2 = 0.0
X = 1.27f
D1 = 0.65f
f = | R2 / 2 | = 680.0 mm
DEC2 = 56.939 mm
DEC3 = 550.551 mm

It is clear from FIG. 12 that the magnified image does not include strain and is recognized as natural.

As a result, it is proved that the image being magnified by the apparatus of this embodiment 8 does not include the strain, in a case where the apparatus is provided with the first concave mirror having a spherical reflection surface, X is 1.27f and D1 = 0.65f.

EMBODIMENT 9

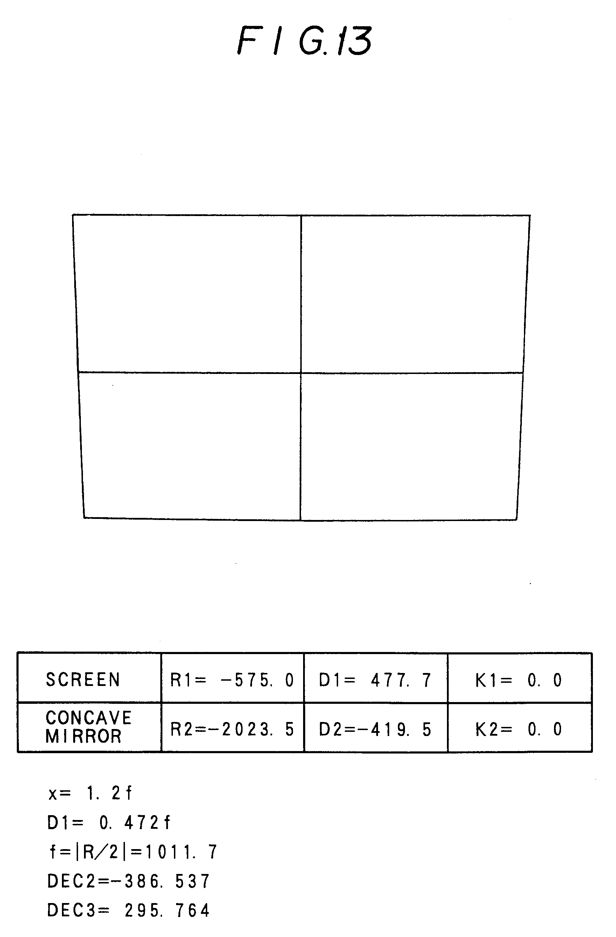

FIG. 13 shows an image screen which is magnified by the apparatus 10 according to the embodiment 9. The specification of the apparatus 10 according to the embodiment 9 is as follows:

R1 = -575.0 mm
D1 = 477.7 mm
K1 = 0.0
R2 = -2023.5 mm
D2 = -419.5 mm
K2 = 0.0
X = 1.2f
D1 = 0.472f
f = | R2 / 2 | = 1011.7 mm
DEC2 = -386.537 mm
DEC3 = 295.764 mm

It is clear from FIG. 13 that the magnified image does not include strain and is recognized as natural.

As a result, it is proved that the image being magnified by the apparatus of this embodiment 9 does not include the strain, in a case where the apparatus is provided with the first concave mirror having a spherical reflection surface, X is 1.2f and D1 = 0.472f.

EMBODIMENT 10

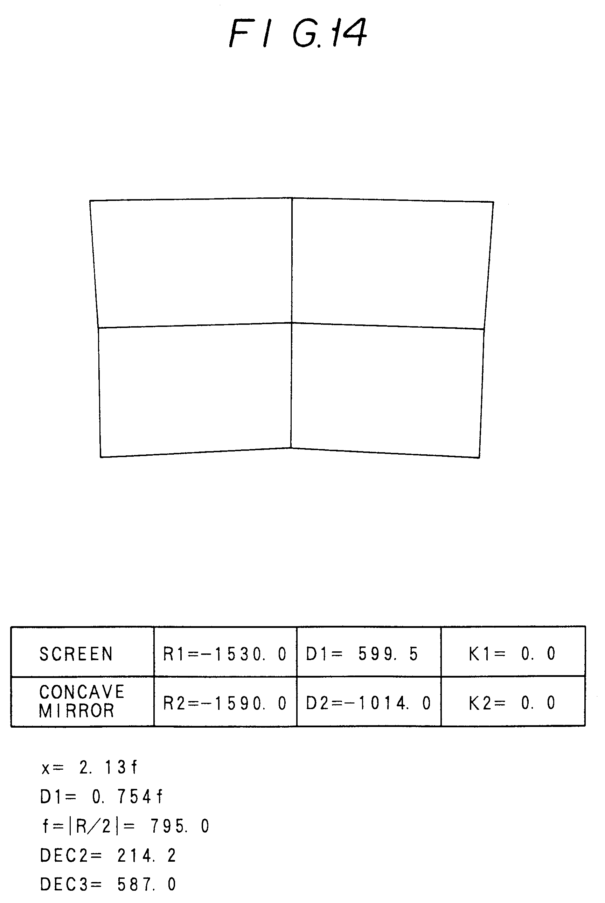

FIG. 14 shows an image screen which is magnified by the apparatus 10 according to the embodiment 10. The specification of the apparatus 10 according to the embodiment 10 is as follows:

R1 = -1530.0 mm
D1 = 599.5 mm
K1 = 0.0
R2 = -1590.0 mm
D2 = -1014.1 mm
K2 = 0.0
X = 2.13f
D1 = 0.754f
f = | R2 / 2 | = 795 mm
DEC2 = 214.2 mm
DEC3 = 587.0 mm

It is clear from FIG. 14 that the magnified image does not include strain and is recognized as natural.

As a result, it is proved that the image magnified by the apparatus of this embodiment 10 does not include the strain, in a case where the apparatus is provided with the first concave mirror having a spherical reflection surface, X is 2.13f and D1 = 0.754f.

However, D1 must be less than or equal to 0.7f to obtain wide service area. Within this area, observer can observe the magnified image.

Therefore, it is preferable that D1 is less than or equal to 0.7f.

Conclusion

It is proved from embodiments 6 - 10 that the image magnified by the apparatus according to the present invention does not include the strain, if D1 is between 0.4f and 0.7f, coefficient of aspherical surface is between -0.3 and 1.0, and X is greater than 1.2f.

D) Service Area

If observer moves, wide service area should be obtained. In order to obtain wide service area, a large first concave mirror may be used. On the other hand, in order to obtain a wide service area without using the large concave mirror, D1 should be equal to or less than 0.7f.

In the embodiment 1, D1 is equal to 0.589f and the size of the concave mirror is 360mm × 730mm. For example, to ensure that observer can observe the magnified image from 1 meter behind from the former position, the size of the concave mirror should be 500mm × 800mm. Therefore, the size is one and half time as large as the former size. As the value D1 becomes small, the smaller mirror is enough to obtain the wide service area. If D1 is greater than 0.7f, the size of concave mirror is greater than two times as the former size. On the other hand, if D1 is less than 0.4f, the service area becomes wider. In this case, however, the display unit 14 comes into sight and, therefore, the virtual image vanish from sight. In order to observe the virtual image under this condition, the reflection angle must be increased. As a result, Keyston strain and Bow strain will appear.

Therefore, the value "D1" should be between 0.4f and 0.7f.

EMBODIMENT 11

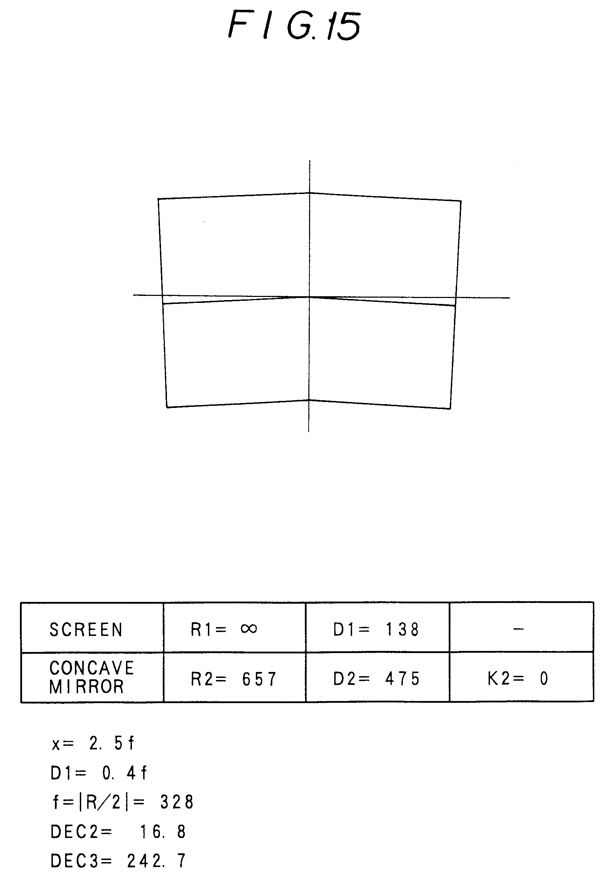

FIG. 15 shows an image screen which is magnified by the apparatus 10 according to the embodiment 11. The specification of the apparatus 10 according to the embodiment 11 is as follows:

R1 = infinite
D1 = 138.0 mm
R2 = 657.0 mm
D2 = 475.0 mm
K2 = 0.0
X = 2.5f
D1 = 0.4f
f = | R2 / 2 | = 328 mm
DEC2 = 16.8 mm
DEC3 = 242.7 mm

It is clear from FIG. 15 that the magnified image does not include strain and is recognized as natural.

As a result, it is proved that the image magnified by the apparatus of this embodiment 11 does not include the strain, if X = 2.5f, D1 = 0.4f and the apparatus includes the display unit, in which radius of curvature of the screen 1 is infinite such as a liquid crystal display, a flat CRT ( Cathode Ray Tube ), and the concave mirror, in which coefficient of aspherical surface is 0.0.

EMBODIMENT 12

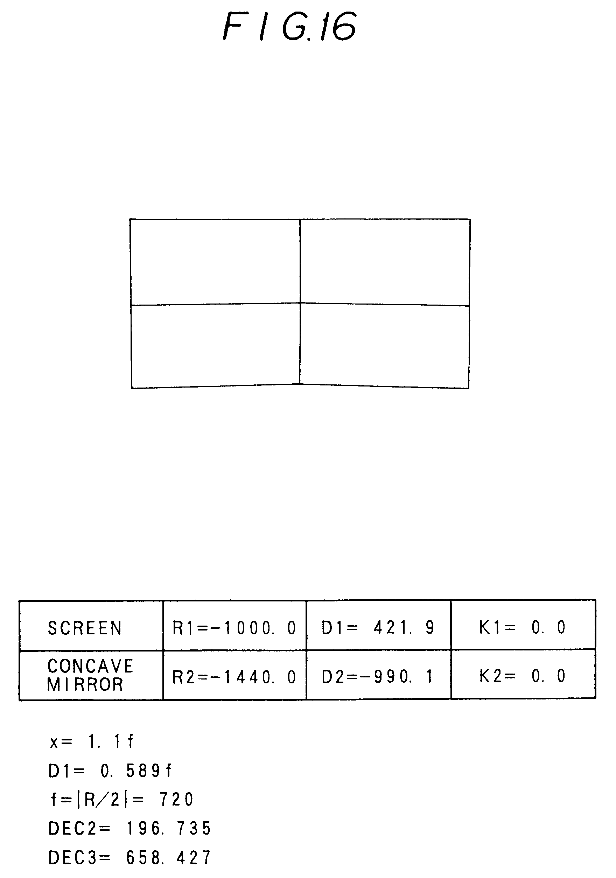

FIG. 16 shows an image screen which is magnified by the apparatus 10 according to the embodiment 12. The specification of the apparatus 10 according to the embodiment 12 is as follows:

R1 = -1000.0 mm
D1 = 477.9 mm
K1 = 0.0
R2 = -1440.0 mm
D2 = -953.3 mm
K2 = 0.0
X = 1.1f
D1 = 0.66f
f = | R2 / 2 | = 720 mm
DEC2 = 294.155 mm
DEC3 = 716.804 mm

It is clear from FIG. 16 that the magnified image does not include strain. However, the image is not recognized as natural, since the aspect ratio of the image is beyond tolerance limits.

According to the above embodiments of the present invention, image strain can be decreased and the image can be more accurately displayed. Therefore, the accuracy in displaying the image information can be enhanced. Since the reflection surface of the concave mirror is made aspherical, the image strain is improved. Further, by decreasing the distance D1, the service area can be widened.

II) In the following embodiments 13 - 21, two concave mirrors are used

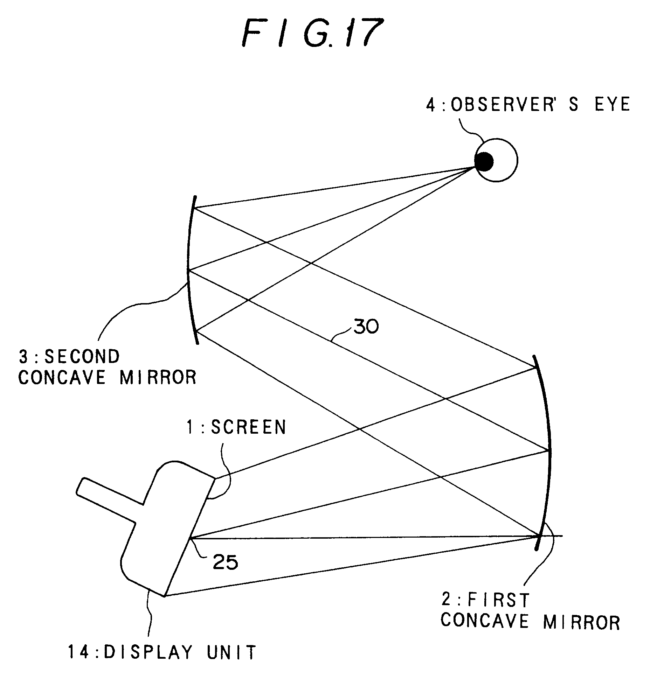

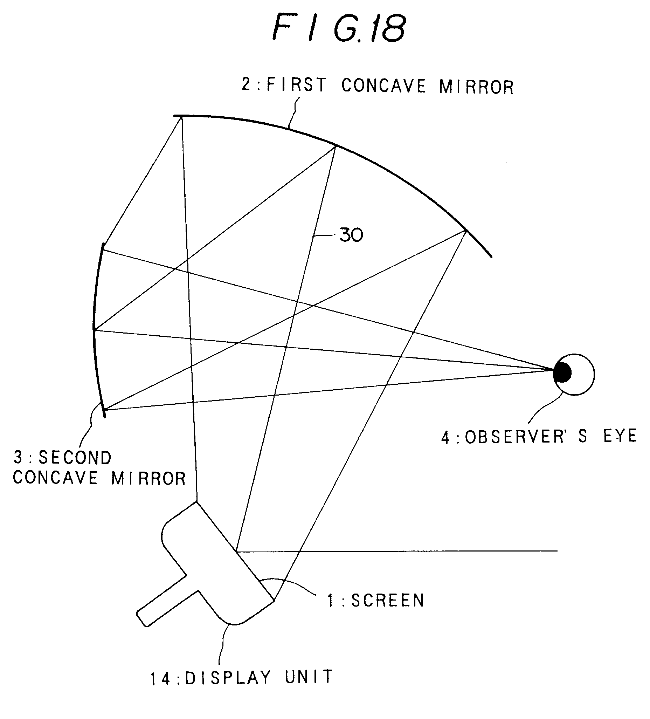

FIG. 17 is a schematic diagram showing a third aspect of an apparatus for observing a magnified image according to the present invention, and FIG. 18 is a schematic diagram showing a fourth aspect of a apparatus for observing a magnified image according to the present invention. The apparatus shown in FIG. 18 is the same as that shown in FIG. 17 except that in the third aspect of the apparatus shown FIG. 17, a central optical path 30 from the screen 1 to the observer's eyes 4 does not intersect each other, whereas,in the fourth aspect of the apparatus shown FIG. 18, the central optical path 30 from the screen 1 to the observer's eyes 4 intersects each other. As is shown in FIGs. 17 and 18, the apparatus 10 according to the following embodiments 13 - 25 of the present invention includes a first concave mirror 2, a second concave mirror 3 and the display unit 14.

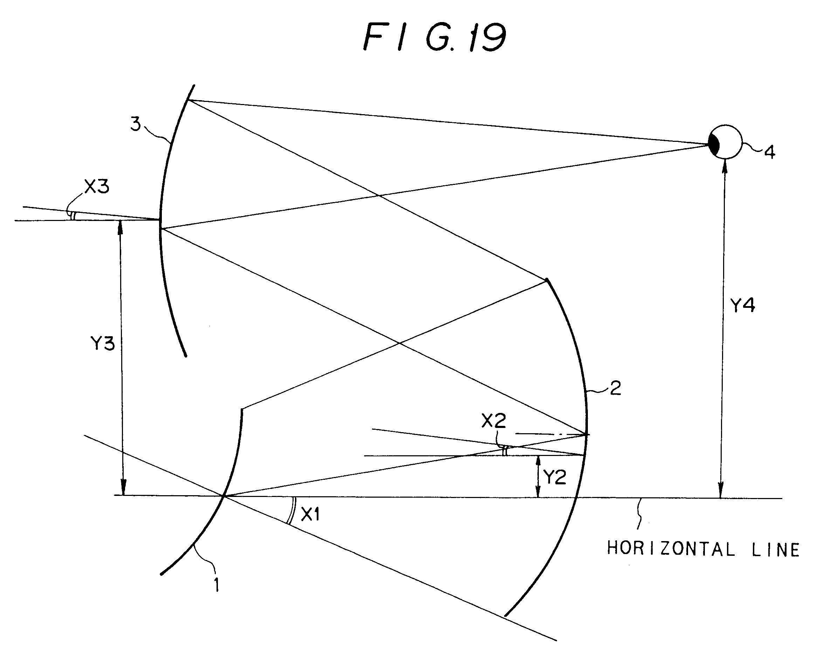

FIG. 19 schematically shows an arrangement of the screen 1 of the display unit 14, the first concave mirror 2, the second concave mirror 3 and the observer's eyes 4. As is shown in FIG. 19, in the following embodiments 13 - 27,

symbol " X1 " is defined as an angle formed where a line passing through the center 25 of the screen 1 and extending transverse to the screen 1 intersects a horizontal line passing through the center 25 of the screen 1,

Symbol " X2 " is defined as an angle formed where a line passing through a center of the first concave mirror 2 and extending transverse to the first concave mirror 2 intersects the horizontal line,

Symbol " X3 " is defined as an angle formed where a line passing through a center of the second concave mirror 3 and extending transverse to the second concave mirror 3 intersects the horizontal line,

Symbol " Y2 " is defined as a distance from the horizontal line to a center of the first concave mirror 2,

Symbol " Y3 " is defined as a distance from the horizontal line to a center of the second concave mirror 3, and

Symbol " Y4 " is defined as a distance from the horizontal line to the observer's eyes 4.

Further, in the following embodiment 13 - 27,

symbol " R1 " represents a radius of curvature of the screen 1,

symbol " R2 " represents a radius of curvature of the first concave mirror 2,

symbol " R3 " represents a radius of curvature of the second concave mirror 3,

symbol " D1 " represents a distance between a plane passing the center of the screen 1 and being transverse to the optical axis of the first concave mirror 2 and a plane passing the center of the first concave mirror 2 and transverse to the optical axis of the first concave mirror 2,

symbol " D3 " represents a distance between the plane passing the center of the first concave mirror 2 and being transverse to the optical axis of the first concave mirror 2 and a plane passing the center of the second concave mirror 3 and transverse to the optical axis of the first concave mirror 2, and

symbol " D4 " represents a distance between the plane passing the center of the second concave mirror 3 and being transverse to the optical axis of the first concave mirror 2 and a plane passing the center of the observer's eye 4 and transverse to the optical axis of the first concave mirror 2.

In the following embodiments 13 - 27 made with reference to FIGs 17 to 37, it should be noted that same symbols are used to denote same elements.

A) The third aspect of the present invention

EMBODIMENT 13

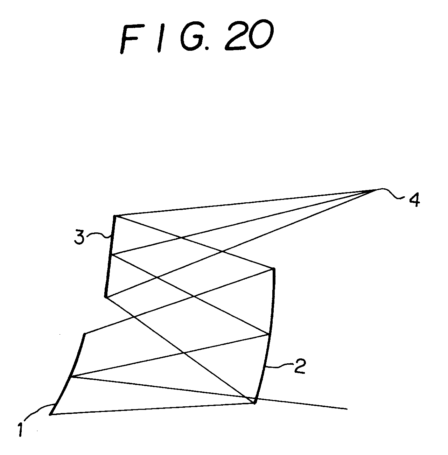

FIG. 20 shows an arrangement of the screen 1 of the display unit 14, the first concave mirror 2, the second concave mirror 3 and the observer's eyes 4 in the embodiment 13. The apparatus of this embodiment 13 corresponds to the third aspect of the present invention, therefore, the central optical path 30 from the screen 1 to the observer's eyes 4 does not intersect each other.

The specification of the apparatus 10 according to the embodiment 13 is as follows:

R1 = -575.0000 mm
R2 = -1010.7923 mm
R3 = -35119.6768 mm
D1 = 396.176 mm
D3 = -341.989 mm
D4 = 514.647 mm
X1 = -15.362 degree.
X2 = -1.150 degree.
X3 = 0.105 degree.
Y2 = 153.615 mm
Y3 = 299.449 mm
Y4 = 531.177 mm

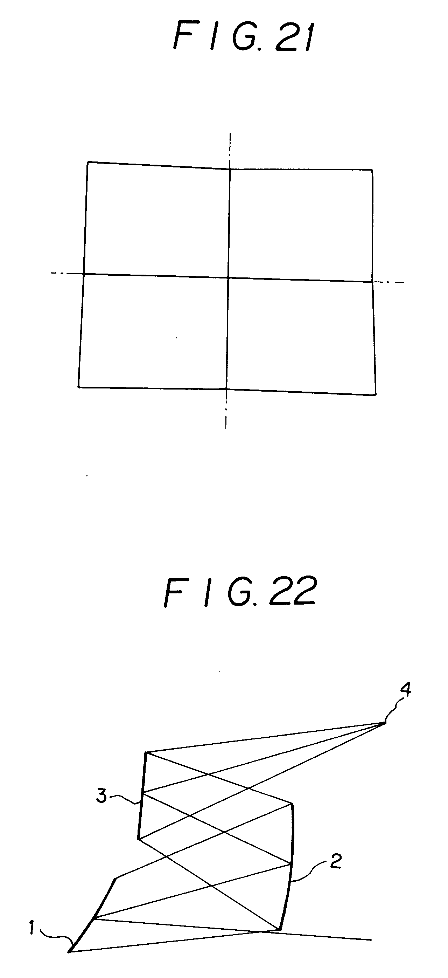

FIG. 21 shows an image screen magnified by the apparatus 10 according to the embodiment 13. In this case, the aspect ratio is 1.36215, the Keyston strain is 0.033, the Bow strain is 0.0036 and a field angle is 25 degree.

It is clear from FIG. 21 that the magnified image does not include strain and is recognized as natural. Particularly, the difference in the aspect ratio is within 3 %, therefore, the image quality being tolerable.

As a result, it is proved that the image magnified by the apparatus does not include the strain in a case where the apparatus 10 is provided with two concave mirrors for magnifying the image through the optical path from the screen 1 to the observer' eyes 4 and the optical path does not intersect each other under the above condition.

EMBODIMENT 14

FIG. 22 shows an arrangement of the screen 1 of the display unit 14, the first concave mirror 2, the second concave mirror 3 and the observer's eyes 4 in the embodiment 14. The apparatus of this embodiment 14 corresponds to the third aspect of the present invention, therefore, the central optical path 30 from the screen 1 to the observer's eyes 4 does not intersect each other.

The specification of the apparatus 10 according to the embodiment 14 is as follows:

R1 = -575.0000 mm
R2 = -1058.2243 mm
R3 = 4502.3780 mm
D1 = 400.000 mm
D3 = -321.311 mm
D4 = 495.857 mm
X1 = -25.298 degree.
X2 = -1.273 degree.
X3 = -0.335 degree.
Y2 = 163.568 mm
Y3 = 309.212 mm
Y4 = 538.296 mm

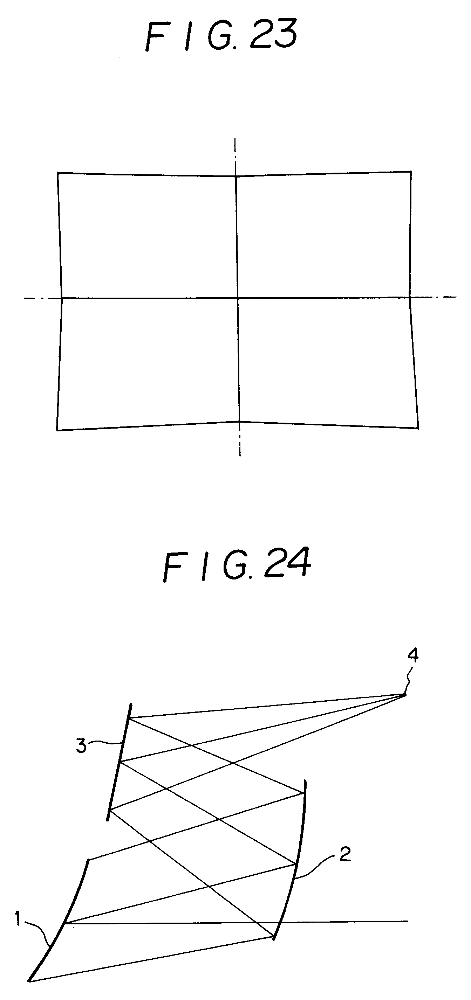

FIG. 23 shows an image screen magnified by the apparatus 10 according to the embodiment 14. In this case, the aspect ratio is 1.48496, the Keyston strain is 0.01408, the Bow strain is 0.00794 and the field angle is 30 degree.

It is clear from FIG. 23 that the magnified image does not include strain and is recognized as natural, therefore, the image quality being tolerable.

As a result, it is proved that the image magnified by the apparatus does not include the strain in a case where the apparatus 10 is provided with two concave mirrors for magnifying the image through the optical path from the screen 1 to the observer' eyes 4 and the optical path does not intersect each other under the above condition.

EMBODIMENT 15

FIG. 24 shows an arrangement of the screen 1 of the display unit 14, the first concave mirror 2, the second concave mirror 3 and the observer's eyes 4 in the embodiment 15. The apparatus of this embodiment 15 corresponds to the third aspect of the present invention, therefore, the central optical path 30 from the screen 1 to the observer's eyes 4 does not intersect each other.

The specification of the apparatus 10 according to the embodiment 15 is as follows:

R1 = -1000.0000 mm
R2 = -1578.3119 mm
R3 = 7247.6985 mm
D1 = 458.436 mm
D3 = -463.806 mm
D4 = 662.622 mm
X1 = -23.776 degree.
X2 = 0.000 degree.
X3 = 0.000 degree.
Y2 = 387.199 mm
Y3 = -915.773 mm
Y4 = 513.184 mm

This embodiment 15 shown in FIG. 24 is designed such that depth of the apparatus 10 may be a minimum, since X2 and X3 are equal to zero degree, and therefore, the first and second concave mirrors 2 and 3 are transverse to the horizontal line.

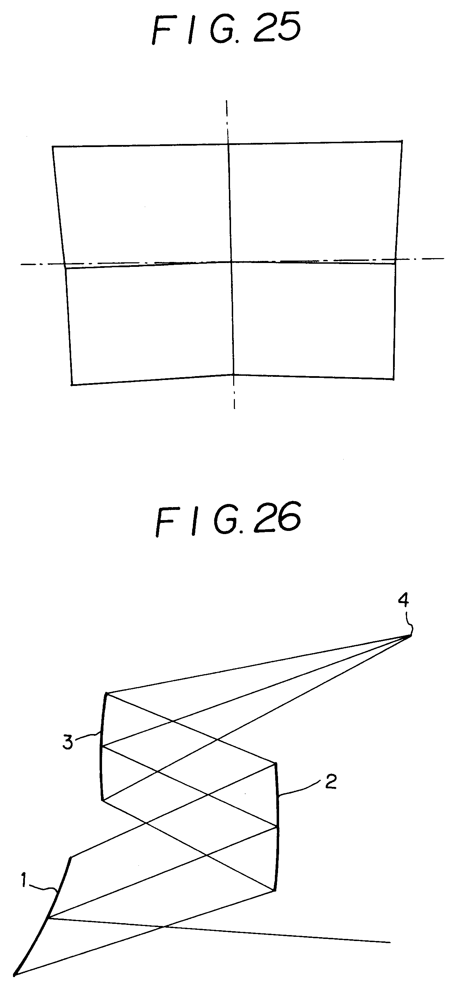

FIG. 25 shows an image screen magnified by the apparatus 10 according to the embodiment 15. In this case, the aspect ratio is 1.48757, the Keyston strain is 0.06455, the Bow strain is 0.01910 and the field angle is 27.274 degree.

It is clear from FIG. 25 that the magnified image does not include strain and is recognized as natural, therefore, the image quality being tolerable. However, the aspect ratio of this embodiment is a limit of a tolerable value.

As a result, it is proved that the image magnified by the apparatus does not include the strain and is recognized as natural in a case where the apparatus 10 is provided with two concave mirrors for magnifying the image through the optical path from the screen 1 to the observer' eyes 4 and the optical path does not intersect each other under the above condition.

EMBODIMENT 16

FIG. 26 shows an arrangement of the screen 1 of the display unit 14, the first concave mirror 2, the second concave mirror 3 and the observer's eyes 4 in the embodiment 16. The apparatus of this embodiment 16 corresponds to the third aspect of the present invention, therefore, the central optical path 30 from the screen 1 to the observer's eyes 4 does not intersect each other.

The specification of the apparatus 10 according to the embodiment 16 is as follows:
R1 = -575.0000 mm
R2 = -1742.9410 mm
R3 = 1547.3566 mm
D1 = 310.535 mm
D3 = -251.346 mm
D4 = 420.147 mm
X1 = -19.151 degree.
X2 = 2.682 degree.
X3 = 1.646 degree.
Y2 = 180.648 mm
Y3 = 290.530 mm
Y4 = 514.276 mm

This embodiment 16 shown in FIG. 26 is designed such that the size of the concave mirrors 2 and 3 used in the apparatus 10 is small.

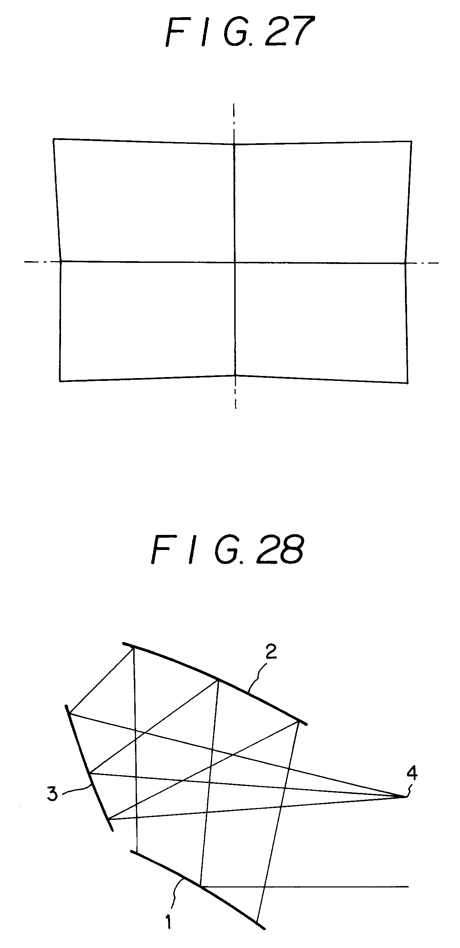

FIG. 27 shows an image screen magnified by the apparatus 10 according to the embodiment 16. In this case, the aspect ratio is 1.55213, the Keyston strain is 0.0264, the Bow strain is 0.0052 and the field angle is 30 degree.

It is clear from FIG. 27 that the magnified image does not include strain and is recognized as natural, therefore, the image quality being tolerable. However, the aspect ratio of this embodiment is a tolerable limit value.

As a result, it is proved that the image magnified by the apparatus does not include the strain and is recognized as natural in a case where the apparatus 10 is provided with two concave mirrors for magnifying the image through the optical path from the screen 1 to the observer' eyes 4 and the optical path does not intersect each other under the above condition.

B) The forth aspect of the present invention

EMBODIMENT 17

FIG. 28 shows an arrangement of the screen 1 of the display unit 14, the first concave mirror 2, the second concave mirror 3 and the observer's eyes 4 in the embodiment 17. The apparatus of this embodiment 17 corresponds to the fourth aspect of the present invention, therefore, the central optical path 30 from the screen 1 to the observer's eyes 4 intersects each other.

The specification of the apparatus 10 according to the embodiment 17 is as follows:
R1 = -1000.0000 mm
R2 = -1538.5070 mm
R3 = 10096.5321 mm
D1 = 65.017 mm
D3 = -299.682 mm
D4 = 666.027 mm
X1 = 55.950 degree.
X2 = 62.045 degree.
X3 = 18.082 degree.
Y2 = 488.327 mm
Y3 = 289.285 mm
Y4 = 222.783 mm

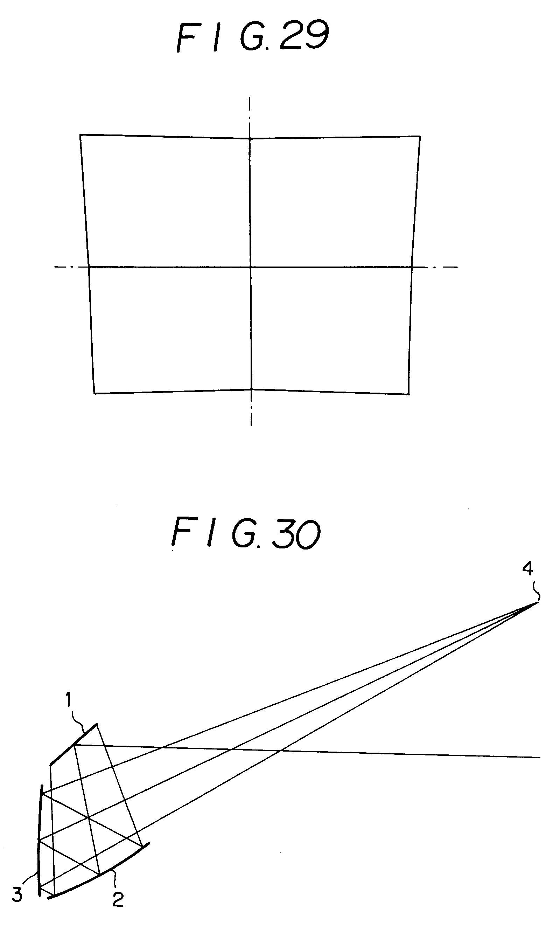

FIG. 29 shows an image screen magnified by the apparatus 10 according to the embodiment 17. In this case, the aspect ratio is 1.33718, the Keyston strain is 0.0522, the Bow strain is 0.00736 and the field angle is 27.50 degree.

It is clear from FIG. 29 that the magnified image includes a little Keyston strain, but does not include large strain and is recognized as natural. The aspect ratio of this embodiment is tolerable.

As a result, it is proved that the image magnified by the apparatus does not include the strain and is recognized as natural in a case where the apparatus 10 is provided with two concave mirrors for magnifying the image through the optical path from the screen 1 to the observer' eyes 4 and the optical path intersects each other under the above condition.

EMBODIMENT 18

FIG. 30 shows an arrangement of the screen 1 of the display unit 14, the first concave mirror 2, the second concave mirror 3 and the observer's eyes 4 in the embodiment 18. As is shown in FIG. 30, the apparatus of this embodiment 18 corresponds to the fourth aspect of the present invention, therefore, the central optical path 30 from the screen 1 to the observer's eyes 4 intersects each other.

The specification of the apparatus 10 according to the embodiment 18 is as follows:

R1 = infinite
R2 = -952.2558 mm
R3 = 2150.2372 mm
D1 = 71.609 mm
D3 = -116.609 mm
D4 = 687.831 mm
X1 = -42.025 degree.
X2 = -52.727 degree.
X3 = 0.000 degree.
Y2 = -182.592 mm
Y3 = -162.903 mm
Y4 = 252.841 mm

In this embodiment 18, the screen 1 is a flat screen, and the second concave mirror 3 is arranged transverse to the horizontal line.

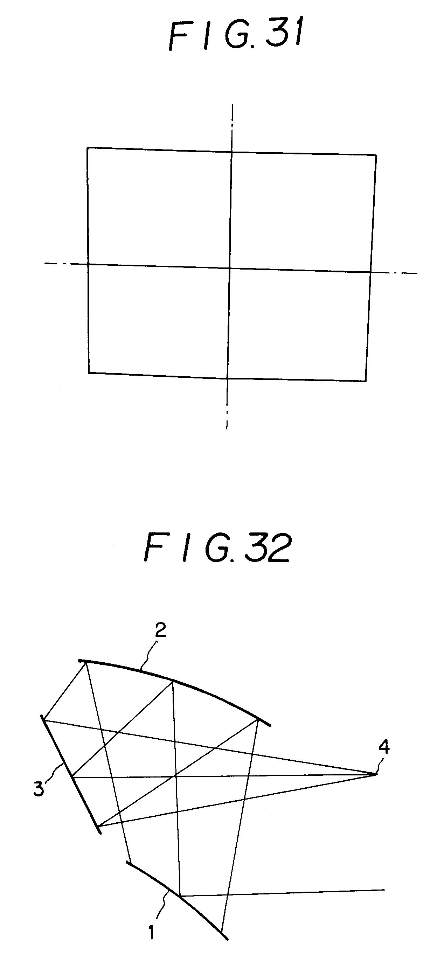

FIG. 31 shows an image screen magnified by the apparatus 10 according to the embodiment 18. In this case, the aspect ratio is 1.30996, the Keyston strain is 0.02865, the Bow strain is 0.00848 and the field angle is 12.00 degree.

It is clear from FIG. 31 that the magnified image does not include large strain and is recognized as natural. The aspect ratio of this embodiment is tolerable.

As a result, it is proved that the image magnified by the apparatus does not include the strain and is recognized as natural in a case where the apparatus 10 is provided with two concave mirrors for magnifying the image through the optical path from the screen 1 to the observer' eyes 4 and the optical path intersects each other under the above condition.

## EMBODIMENT 19

FIG. 32 shows an arrangement of the screen 1 of the display unit 14, the first concave mirror 2, the second concave mirror 3 and the observer's eyes 4 in the embodiment 19. As is shown in FIG. 32, the apparatus of this embodiment 19 corresponds to the fourth aspect of the present invention, therefore, the central optical path 30 from the screen 1 to the observer's eyes 4 intersects each other.

The specification of the apparatus 10 according to the embodiment 19 is as follows:

R1 = -575.0000 mm
R2 = -942.0978 mm
R3 = 7837.9125 mm

D1 = 35.532 mm
D3 = -216.153 mm
D4 = 528.126 mm
X1 = 45.596 degree.
X2 = 65.323 degree.
X3 = 21.908 degree.
Y2 = 408.884 mm
Y3 = 252.750 mm
Y4 = 229.145 mm

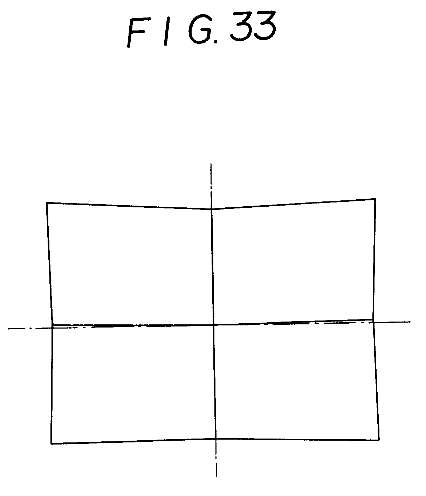

FIG. 33 shows an image screen magnified by the apparatus 10 according to the embodiment 19. In this case, the aspect ratio is 1.45770, the Keyston strain is 0.00242, the Bow strain is -0.01458 and the field angle is 32.700 degree.

It is clear from FIG. 33 that the magnified image does not include large strain and is recognized as natural. The aspect ratio of this embodiment is a tolerable limit value.

As a result, it is proved that the image magnified by the apparatus does not include the strain and is recognized as natural in a case where the apparatus 10 is provided with two concave mirrors for magnifying the image through the optical path from the screen 1 to the observer' eyes 4 and the optical path intersects each other under the above condition.

According to the above embodiments 13 - 19 of the present invention, since the apparatus 10 is provided with two concave mirrors 2 and 3 through the optical path from the screen 1 to the observer's eyes 4, the image can be further magnified and image strain can be further decreased. Therefore, the image can be more accurately displayed and the accuracy in displaying the image information can be enhanced. Further, by changing a reflection angle, the apparatus can be downsized.

III) In the following embodiments 20 - 27, the apparatus 10 is provided with a lens for refracting a optical path.

## EMBODIMENT 20

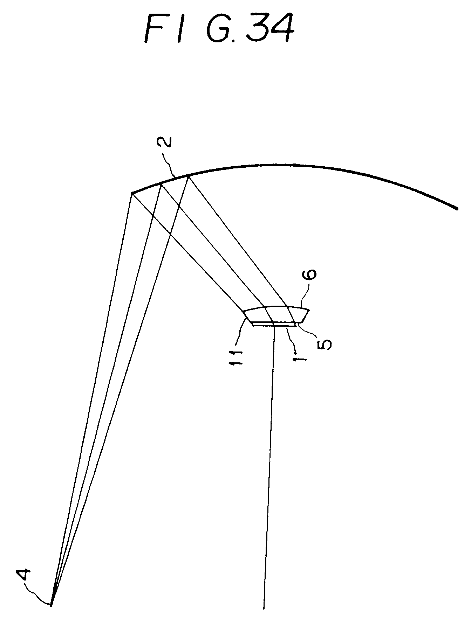

FIG. 34 shows an arrangement of the screen 1 of the display unit 14, a convex lens 11, the first concave mirror 2 and the observer's eyes 4 in the embodiment 20.

First surface of the lens 11 being opposite to the screen 1 is represented by the reference number 5, and second surface of the lens 11 being opposite to the first concave mirror 2 is represented by the reference number 6. In the embodiments 20 - 27,

symbol " R5 " represents a radius of curvature of the first surface 5,

symbol " R6 " represents a radius of curvature of the second surface 6,

symbol " D2 " represents a distance between a plane passing the center of the first concave mirror 2 and being transverse to the optical axis of the first concave mirror 2 and a plane passing the center of the observer's eye 4 and transverse to the optical axis of the first concave mirror 2,

symbol " D5 " represents a distance between the plane passing the center of the screen 1 and being transverse to the optical axis of the first concave mirror 2 and a plane passing the center of the first surface 5 and transverse to the optical axis of the first concave mirror 2,

symbol " D6 " represents a distance between the plane passing the center of the first surface 5 and being transverse to the optical axis of the first concave mirror 2 and a plane passing the center of the second surface 6 and transverse to the optical axis of the first concave mirror 2, and

symbol " D7 " represents a distance between a plane passing the center of the lens 11 and being transverse to the optical axis of the first concave mirror 2 and the plane passing the center of the first concave mirror 2 and transverse to the optical axis of the first concave mirror 2.

The specification of the apparatus 10 according to the embodiment 20 is as follows:

R1 = infinite
R2 = -1000.000 mm
R5 = infinite
R6 = 344.800 mm
D2 = -815.000 mm
D5 = 6.000 mm
D6 = 30.000 mm
D7 = 258.000 mm
X1 = 2.400 degree.
X2 = 0.000 degree.
X3 = 2.400 degree.
Y2 = -31.115 mm
Y3 = 475.439 mm

The apparatus 10 of the embodiment 20 is provided, between the screen 1 and the first concave mirror 2, with the convex lens 11 to decrease the Bow strain. The convex lens 11 may be replaced by an Fresnel lens having the same radius of curvature as the lens 11.

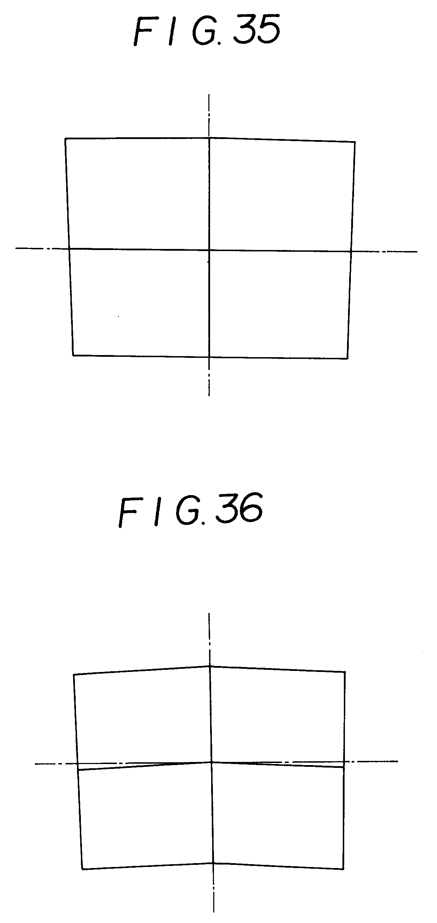

FIG. 35 shows an image screen magnified by the apparatus 10 according to the embodiment 20, and FIG. 36 shows an image screen magnified by the apparatus 10 in a case where the lens 11 is removed from the apparatus 10 of the embodiment 20.

It is clear from FIG. 35 that the magnified image of this embodiment 20 does not include large strain and is recognized as natural. In this case, the Bow strain is 0.014, whereas that of the magnified image shown in FIG. 36 is 0.048.

As a result, it is proved that the Bow strain is decreased and, therefore, the image quality is enhanced, in a case where the apparatus 10 is provided with the convex lens 11 between the screen 1 and the first concave mirror 2, under the above condition. The lens 11 is effective in a case where the apparatus 10 is provided with a flat screen such as a liquid crystal display, since the directivity of the flat screen is narrow and, therefore, without using the lens 11, a white and black image may be magnified by the apparatus 10 in spite of color picture being displayed on the screen 1.

EMBODIMENT 21

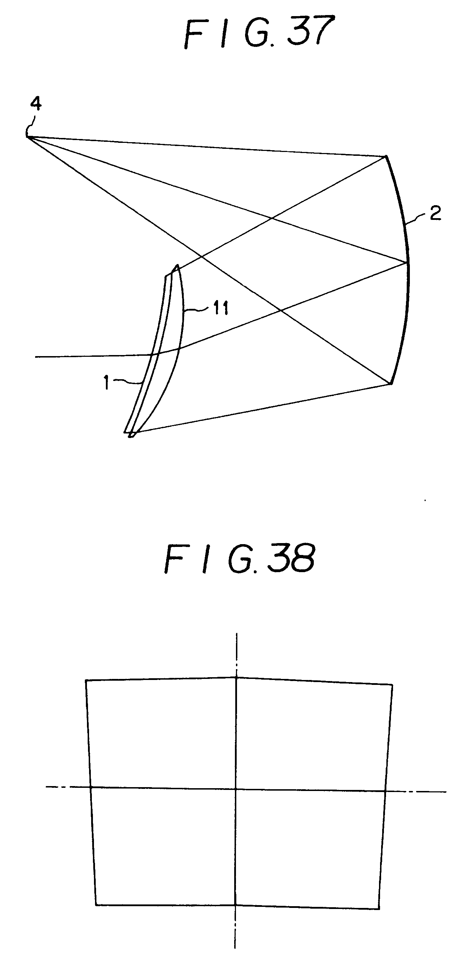

FIG. 37 shows an arrangement of the screen 1 of the display unit 14, a convex lens 11, a first concave mirror 2 and the observer's eyes 4 in the embodiment 21.

The specification of the apparatus 10 according to the embodiment 21 is as follows:

R1 = -1000.000 mm
R2 = 893.300 mm
R5 = 1000.000 mm
R6 = 400.000 mm
D2 = -611.790 mm
D3 = 413.050 mm
D5 = 10.000 mm
D6 = 30.000 mm
D7 = 373.050 mm
X1 = 14.200 degree.
X2 = 0.000 degree.
X3 = 14.200 degree.
Y2 = 160.800 mm
Y3 = 418.700 mm

As is shown in FIG. 37, the apparatus 10 of the embodiment 21 is provided, between the screen 1 and the first concave mirror 2, with the convex lens 11 to decrease the Bow strain. As is explained in the embodiment 20, the convex lens 11 may be replaced by a Fresnel lens or a circular Fresnel lens having the same radius of curvature as the lens 11.

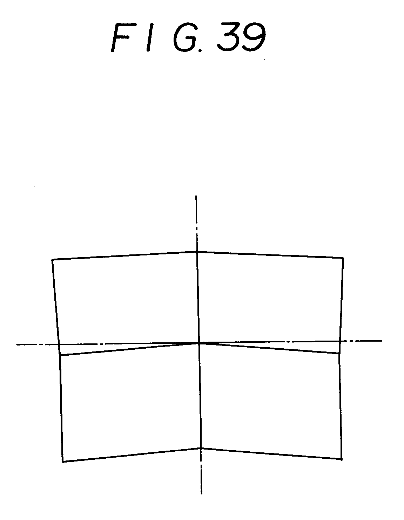

FIG. 38 shows an image screen magnified by the apparatus 10 according to the embodiment 21, and FIG. 39 shows an image screen magnified by the apparatus 10 in a case where the lens 11 is removed from the apparatus 10 of the embodiment 21.

It is clear from FIG. 38 that the magnified image of this embodiment 21 does not include large strain and is recognized as natural. In this case, the Bow strain is 0.039, whereas that of the magnified image shown in FIG. 36 is 0.078.

As a result, it is proved that the Bow strain is decreased and, therefore, the image quality is enhanced, in a case where the apparatus 10 is provided with the convex lens 11 between the screen 1 and the first concave mirror 2, under the above condition. The lens 11 is effective in a case where the apparatus 10 is provided with a flat screen such as a liquid crystal display, as explained in the embodiment 20.

## EMBODIMENT 22

The specification of the apparatus 10 according to the embodiment 22 is as follows:

R1 = infinite
R2 = -1300.000 mm
R5 = infinite
R6 = -2000.000 mm
D2 = 661.500 mm
D5 = 6.000 mm
D6 = 8.000 mm
D7 = 222.900 mm
X1 = 0.000 degree.
X2 = -6.729 degree.
X3 = 0.000 degree.
Y2 = 0.000 mm
Y3 = 600.100 mm

In this case, the Bow strain is 0.030. The value " 0.030 " is within a tolerable range. However, the effect of the convex lens 11 can not be obtained if the apparatus is provided with a convex lens having a absolute value of a radius of curvature being greater than 2000 mm. Therefore, it is preferable that the absolute value of R6 is less than or equal to 2000 mm.

## EMBODIMENT 23

The specification of the apparatus 10 according to the embodiment 23 is as follows:

R1 = infinite
R2 = -600.000 mm
R5 = infinite
R6 = -240.000 mm
D2 = 710.500 mm
D5 = 6.000 mm
D6 = 20.000 mm
D7 = 84.500 mm
X1 = 0.000 degree.
X2 = -1.236 degree.
X3 = 0.000 degree.
Y2 = 0.000 mm
Y3 = 398.400 mm

In this case, the Bow strain is 0.032. The value " 0.032 " is within a tolerable range. However, torsional strain appears, if the apparatus is provided with a convex lens having a absolute value of a radius of curvature being less than 240 mm. Therefore, the magnified image has strain in horizontal direction, in spite of having no strain in vertical direction, and is not recognized as natural.

As a result, according to the embodiments 22 and 23, it is preferable that the absolute value of R6 is less than or equal to 2000 mm, and is greater than or equal to 240 mm.

## EMBODIMENT 24

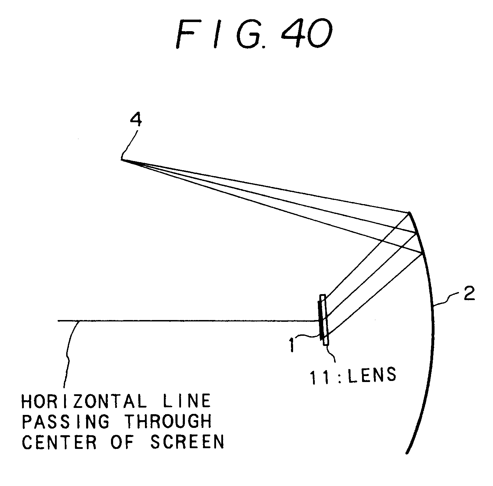

FIG. 40 shows an arrangement of the screen 1 of the display unit 14, a linear Fresnel lens 11, a first concave mirror 2 and the observer's eyes 4 in the embodiment 24.

The specification of the apparatus 10 according to the embodiment 24 is as follows:

R1 = infinite
R2 = -1052.6202 mm
D1 = 294.000 mm
D3 = -815.337 mm
D5 = 6.000 mm
D6 = 30.000 mm
X1 = 6.015 degree.
X2 = 0.000 degree.
Y2 = -31.115 mm
Y3 = 475.439 mm

As is shown in FIG. 40, the apparatus 10 of the embodiment 24 is provided, between the screen 1 and the first concave mirror 2, with the lens 11.

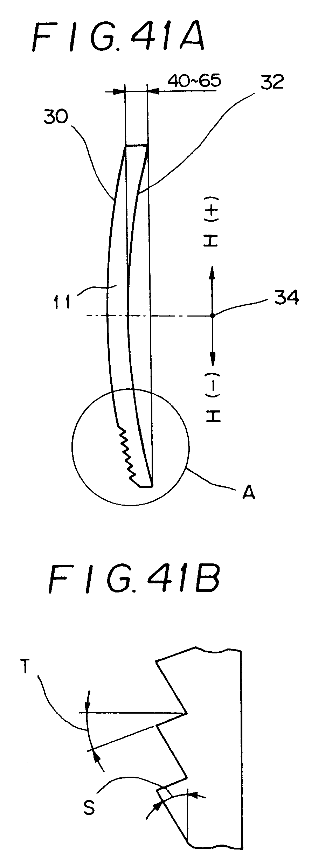

FIG. 41a is a sectional view showing a linear Fresnel lens 11 used in the apparatus 10 of this embodiment 24, and FIG. 41b is a partially sectional view showing a portion A of FIG. 41a.

The linear Fresnel lens 11 shown in FIG. 41a is provided with a first surface 30 and a second surface 32. A point 34 shown in FIG. 41a is an origin of coordinates relating to an angle S and angle T, which are defined in FIG. 41b. The angle S and the angle T are represented by the following equation:

$$S = A1 \times H + A2 \times H^2 + A3 \times H^3 + A4 \times H^4 + A5 \times H^5 + C$$
$$T = K1 \times H + K2 \times H^2 + K3 \times H^3 + K4 \times H^4 + K5 \times H^5 + C'$$

Wherein, H is a distance from the origin 34 to the direction H(+) or H(-), as shown in FIG. 41a, a pitch of the linear Fresnel lens is 0.5mm.

C = 11.0,
A1 = -0.022,
$A2 = -0.5 \times 10^{-5}$,
$A3 = 6.0 \times 10^{-8}$,
$A4 = 1.4 \times 10^{-10}$,
$A5 = -6.0 \times 10^{-13}$,
C' = 16.0629,
$K1 = -6.8563 \times 10^{-2}$,
$K2 = -4.6351 \times 10^{-5}$,
$K3 = 2.2699 \times 10^{-7}$,
$K4 = 6.8503 \times 10^{-10}$, and
K5 = 0.

As is shown in FIG. 41a, since the first surface 30 and the second surface 32 are made aspherical, light emitted from center portion of the screen 1 and portion of the screen 1 can be easily refracted, the magnified image does not include strain as a whole.

In this embodiment 24 shown in FIG. 40, X1 = 6.015 degree, which is nearly equal to zero. Since the apparatus is provided with the linear Fresnel lens 11 for refracting the optical path, the value of X1 is set near to zero, i.e. the line 23 is brought close to the line 24. Therefore, a decline in luminance of the magnified image and a change in color of the magnified image can be prevented, in spite of the directivity of the screen 1 being narrow.

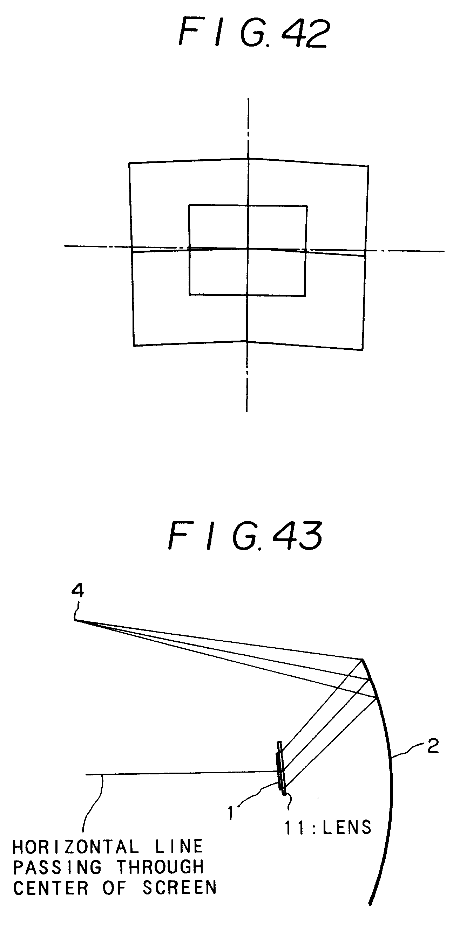

FIG. 42 shows an image screen magnified by the apparatus 10 according to the embodiment 24. It is clear from FIG. 42 that the magnified image of this embodiment 21 does not include large strain and is recognized as natural. In this case, the aspect ratio is 1.28767, and therefore the image quality being tolerable.

## EMBODIMENT 25

FIG. 43 shows an arrangement of the screen 1 of the display unit 14, a linear Fresnel lens 11, the first concave mirror 2 and the observer's eyes 4 in the embodiment 25.

The specification of the apparatus 10 according to the embodiment 25 is as follows:

R1 = -500.0000 mm
R2 = -1052.6202 mm
D1 = 294.000 mm
D3 = -815.337 mm
D5 = 6.000 mm
D6 = 30.000 mm
X1 = 6.087 degree.
X2 = 0.000 degree.
Y2 = -31.115 mm
Y3 = 475.439 mm

As is shown in FIG. 43, the apparatus 10 of the embodiment 24 is provided, between the screen 1 and the first concave mirror 2, with the linear Fresnel lens 11. The linear fresnel lens 11 of this embodiment 25 is the same as that of the embodiment 24. The apparatus 10 of the embodiment 25 is the same as that of the embodiment 24 except that the former is provided with the display unit 14 having a flat screen, whereas the later is provided with the display unit 14 having a spherical screen.

In this embodiment 25 shown in FIG. 43, X1 = 6.087 degree, which is nearly equal to zero. Since the apparatus is provided with the linear Fresnel lens 11 for refracting the optical path, the value of X1 is set near to zero, i.e. the line 23 is brought close to the line 24. Therefore, a decline in luminance of the magnified image and a change in color of the magnified image can be prevented, in spite of the directivity of the screen 1 being narrow.

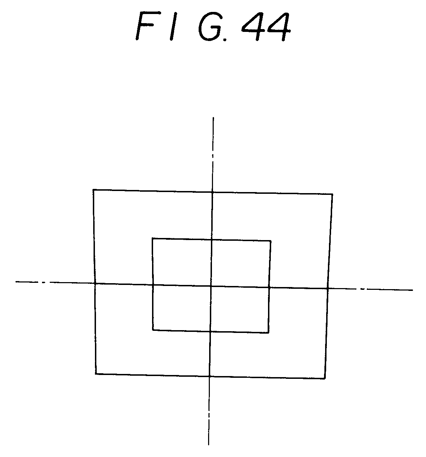

FIG. 44 shows an image screen magnified by the apparatus 10 according to the embodiment 25. It is clear from FIG. 44 that the magnified image of this embodiment 21 does not include large strain and is recognized as natural. In this case, the aspect ratio is 1.29589, and therefore the image quality being tolerable.

## EMBODIMENT 26

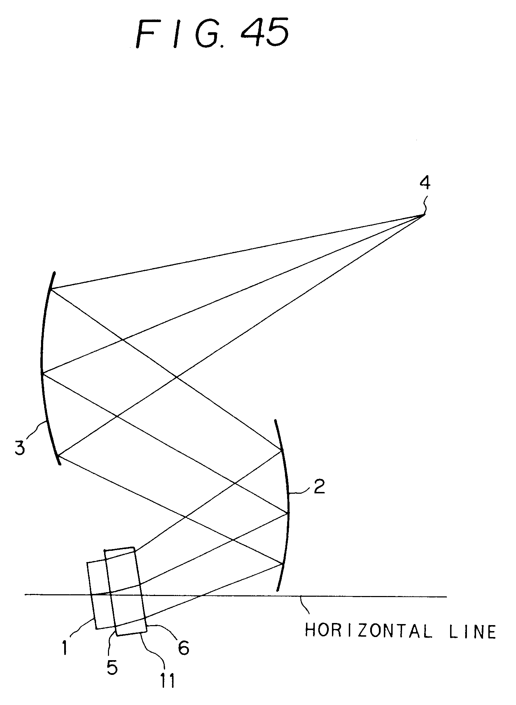

FIG. 45 shows an arrangement of the screen 1 of the display unit 14, the first concave mirror 2, the second concave mirror 3 and the observer's eyes 4 in the embodiment 26. As is shown in FIG. 45, the apparatus of this embodiment 26 corresponds to the third aspect of the present invention, therefore, the central optical path 30 from the screen 1 to the observer's eyes 4 does not intersect each other. The apparatus 10 of the embodiment 26 is further provided, between the screen 1 and the first concave mirror 2, with a lens 11 having a slight positive power for magnifying the image and refracting the optical path. First surface of the lens 11 being opposite to the screen 1 is represented by the reference number 5, and second surface of the lens 11 being opposite to the first concave mirror 2 is represented by the reference number 6. In the embodiments 26 and 27,

symbol " X5 " represents an angle formed where a line passing through the center of the first surface 5 and extending transverse to the first surface 5 intersects the horizontal line,

symbol " X6 " represents an angle formed where a line passing through the center of the second surface 6 and extending transverse to the second surface 6 intersects the horizontal line,

Symbol " Y5 " represents a distance from the horizontal line to a center of the first surface 5, and

Symbol " Y6 " represents a distance from the horizontal line to a center of the second surface 6.

The specification of the apparatus 10 according to the embodiment 26 is as follows:

R1 = infinite
R2 = -1366.5683 mm
R3 = 3528.2725 mm
R5 = infinite
R6 = -345.0000 mm
D1 = 110.652 mm
D3 = -150.000 mm
D4 = 590.220 mm
D5 = 6.000 mm
D6 = 30.000 mm
X1 = 5.284 degree.
X2 = 0.000 degree.
X3 = 0.000 degree.
X5 = 5.284 degree.
X6 = 5.284 degree.
Y2 = 49.844 mm
Y3 = 253.817 mm
Y4 = 778.635 mm
Y5 = 0.000 mm

Y6 = 0.000 mm

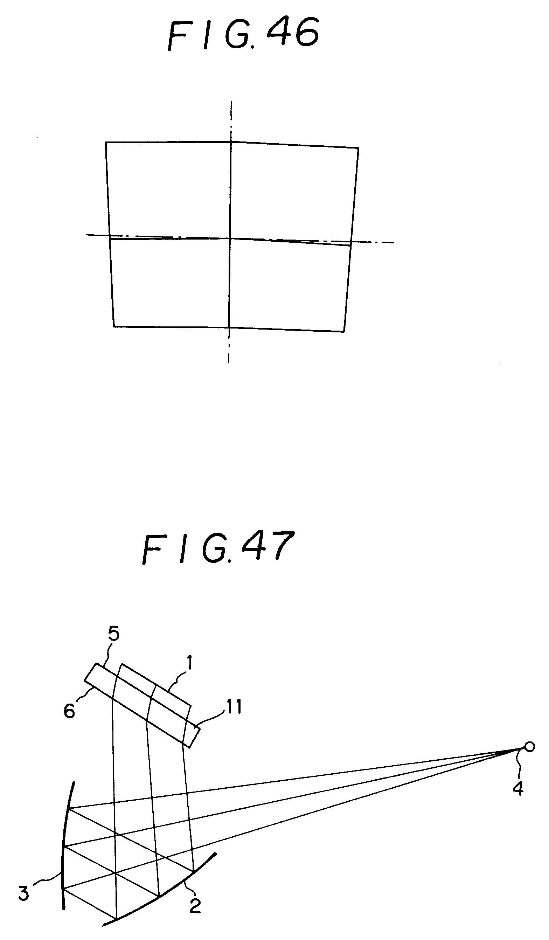

FIG. 46 shows an image screen magnified by the apparatus 10 according to the embodiment 26. In this case, the aspect ratio is 1.321, the Keyston strain is 0.06089, and the Bow strain is 0.0251.

It is clear from FIG. 46 that the magnified image does not include large strain and is recognized as natural. The Keyston strain and the Bow strain are a tolerable limit value.

As a result, it is proved that the image magnified by the apparatus does not include the strain and is recognized as natural in a case where the apparatus 10 is provided with the two concave mirrors 2 and 3, for magnifying the image, disposed between the screen 1 and the observer' eyes 4, and with the lens 11 for magnifying an image and refracting an optical path between the screen 1 and the first concave mirror 2, and the optical path does not intersect each other under the above condition. The lens 11 is effective in a case where the apparatus 10 is provided with a flat screen such as a liquid crystal display, since the directivity of the flat screen is narrow and, therefore, without using the lens 11, a white and black image may be magnified by the apparatus 10 in spite of color picture being displayed on the screen 1.

EMBODIMENT 27

FIG. 47 shows an arrangement of the screen 1 of the display unit 14, the first concave mirror 2, the second concave mirror 3 and the observer's eyes 4 in the embodiment 27. As is shown in FIG. 47, the apparatus of this embodiment 27 corresponds to the fourth aspect of the present invention, therefore, the central optical path 30 from the screen 1 to the observer's eyes 4 intersects each other. The apparatus 10 of the embodiment 27 is provided, between the screen 1 and the first concave mirror 2, with a lens 11 having a slight positive power for magnifying the image and refracting the optical path. As explained in the embodiment 26, first surface of the lens 11 being opposite to the screen 1 is represented by the reference number 5, and second surface of the lens 11 being opposite to the first concave mirror 2 is represented by the reference number 6.

The specification of the apparatus 10 according to the embodiment 27 is as follows:

R1 = infinite
R2 = -2462.4979 mm
R3 = 1231.7549 mm
R5 = infinite
R6 = -800.0000 mm
D1 = 0.000 mm
D3 = -79.078 mm
D4 = 580.895 mm
D5 = 0.000 mm
D6 = 0.000 mm
X1 = -118.366 degree.
X2 = -52.727 degree.
X3 = 0.000 degree.
X5 = -118.366 degree.
X6 = -118.366 degree.
Y2 = -323.699 mm
Y3 = -242.302 mm
Y4 = -1.072 mm
Y5 = -5.000 mm
Y6 = -36.000 mm

In this embodiment 27, the screen 1 of the display unit 14 is a flat surface, since the R1 is infinite.

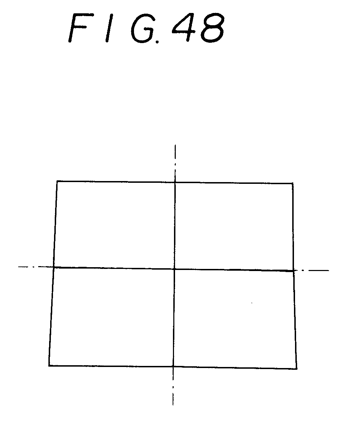

FIG. 48 shows an image screen magnified by the apparatus 10 according to the embodiment 27. In this case, the aspect ratio is 1.3326, the Keyston strain is -0.03165, and the Bow strain is 0.00645. The keyston strain is a negative value.

It is clear from FIG. 48 that the magnified image does not include large strain and is recognized as natural.

As a result, it is proved that the image magnified by the apparatus does not include the strain and is recognized as natural in a case where the apparatus 10 is provided with the two concave mirrors 2 and 3 for magnifying the image through the optical path from the screen 1 to the observer' eyes 4, and with the lens 11 for magnifying an image and refracting an optical path between the screen 1 and the first concave mirror 2, and the optical path intersects each other under the above condition. As explained in the embodiment 26, the lens 11 is effective in a case where the apparatus 10 is provided with a flat screen such as a liquid crystal display, since directivity of the flat screen is narrow.

According to the embodiments 20 - 27, in a case where the apparatus 10 is provided with a flat screen such as a liquid crystal display, the directivity of the flat screen can be changed by providing the lens 11 between the screen 1 and the first concave mirror 2, and, therefore, a color image can be magnified by the apparatus 10 in case of color picture being displayed on the screen 1. Even if the apparatus 10 is provided with the display unit 14 having a spherical screen, the same effects can be obtained.

Claims

1. An apparatus for observing a magnified image characterized by:

a first concave mirror (2) having a radius of curvature R, and a focal length f being equal to | R / 2 |; and

a display unit (14) having a screen (1) being opposite to the first concave mirror and being arranged such that X ≥ 1.2f, in which X is a distance between a center (25) of the first concave mirror and a point, at which a line (24) passing through a center of the screen and extending transverse to the screen intersects an optical axis (22) of the first concave mirror.

2. An apparatus according to claim 1, characterized in that the first concave mirror has an aspherical surface represented by coordinates (x,y,z), in which

$z = C \cdot H^2/(1-(K+1)C^2 \cdot H^2)^{1/2}$,
$C = 1/R$,
$H = (x^2+y^2)^{1/2}$,
$-3.0 \leq K \leq 1.0$, and

in which (x,y) is coordinates on a plane passing through the center of the first concave mirror and being transverse to the optical axis, z is coordinate on the optical axis, and R is a paraxial radius of curvature of the first concave mirror.

3. An apparatus according to claim 1 or 2, characterized in that an optical path to be observed, which extends from the center of the screen, and is reflected by the first concave mirror, does not accord with the optical axis of the first concave mirror.

4. An apparatus according to any one of claims 1 to 3, characterized in that a distance D1 between a plane passing the center of the screen and being transverse to the optical axis of the first concave mirror and a plane passing the center of the first concave mirror and transverse to the optical axis is $0.4f \leq D1 \leq 0.7f$.

5. An apparatus according to any one of claims 1 to 4, characterized in that said apparatus further comprises a second concave mirror (3) being opposite to the first concave mirror.

6. An apparatus according to claim 5, characterized in that the optical path to be observed, which extends from the center of the screen and is reflected by the first concave mirror and the second concave mirror, does not intersect each other.

7. An apparatus according to claim 5, characterized in that the optical path to be observed, which extends from the center of the screen and is reflected by the first concave mirror and the second concave mirror, intersects each other.

8. An apparatus according to any one of claims 1 to 7, further comprising a lens, disposed adjacent to the screen of the display unit, for refracting an optical path.

9. An apparatus according to claim 8, characterized in that the lens is a convex lens.

10. An apparatus according to claim 9, characterized in that the convex lens is a Fresnel lens.

11. An apparatus according to claim 9, characterized in that a radius of curvature R1 of a surface of the convex lens being opposite to the first concave mirror is 240 mm ≤ R1 ≤ 2000 mm.

12. An apparatus according to claim 8, characterized in that the lens is a linear Fresnel lens.

13. An apparatus according to claim 12, characterized in that the linear Fresnel lens includes an aspherical surface.

# F I G. 1

20:OBSERVER

4:OBSERVER'S EYE    2:CONCAVE MIRROR

24:CENTRAL
   LINE
23

25    22:OPTICAL AXIS

1:SCREEN

14:DISPLAY UNIT    10:APPARATUS

# F I G. 2

14 : DISPLAY UNIT

24 : CENTRAL
LINE

1 : SCREEN

2 : CONCAVE MIRROR

25

4 : OBSERVER' S
EYE

22 : OPTICAL AXIS

23

20 : OBSERVER

10 : APPARATUS

FIG. 3

# FIG.4

4: OBSERVER'S EYE

2: CONCAVE MIRROR

D2

X

22

f

24

DEC3

DEC2

14: DISPLAY UNIT

D1

EP 0 664 477 A2

# F I G. 5

| SCREEN | R1=−1000. 0 | D1= 421. 9 | K1= 0. 0 |
|---|---|---|---|
| CONCAVE MIRROR | R2=−1440. 0 | D2=−990. 1 | K2= 0. 0 |

x= 1. 6 f

D1= 0. 589 f

f=|R/2|= 720

DEC2= 196. 735

DEC3= 658. 427

# F I G.6

| SCREEN | R1=-1000. 0 | D1= 421. 9 | K1= 0. 0 |
|---|---|---|---|
| CONCAVE MIRROR | R2=-1440. 0 | D2=-990. 1 | K2= 0. 0 |

$x = \infty$

D1= 0. 589 f

f=|R/2|= 720

DEC2= 196. 735

DEC3= 658. 427

# F I G. 7

| SCREEN | R1=−1000. 0 | D1= 421. 9 | K1= 0. 0 |
|---|---|---|---|
| CONCAVE MIRROR | R2=−1440. 0 | D2=−990. 1 | K2= 0. 0 |

x= 1. 2 f

D1= 0. 589 f

f = |R/2| = 720

DEC2= 196. 735

DEC3= 658. 427

# F I G. 8

| SCREEN | R1=−1000. 0 | D1= 421. 9 | K1= 0. 0 |
|---|---|---|---|
| CONCAVE MIRROR | R2=−1440. 0 | D2=−990. 1 | K2=−3. 0 |

x= 1. 2 f

D1= 0. 589 f

f=|R/2|= 720

DEC2= 196. 735

DEC3= 658. 427

# F I G. 9

| SCREEN | R1=−1000. 0 | D1= 421. 9 | K1= 0. 0 |
|---|---|---|---|
| CONCAVE MIRROR | R2=−1440. 0 | D2=−990. 1 | K2=+1. 0 |

x= 1. 2 f

D1= 0. 589 f

f =|R／2|= 720

DEC2= 196. 735

DEC3= 658. 427

# F I G. 10

| SCREEN | R1=-1000. 0 | D1= 477. 9 | K1= 0. 0 |
|---|---|---|---|
| CONCAVE MIRROR | R2=-1440. 0 | D2=-953. 3 | K2= 0. 0 |

x= 2. 2 f

D1= 0. 66 f

f=|R/2|= 720

DEC2= 294. 155

DEC3= 716. 804

# F I G. 11

| SCREEN | R1=−1000. 0 | D1= 429. 4 | K1= 0. 0 |
|---|---|---|---|
| CONCAVE MIRROR | R2=−1439. 9 | D2=−1196. 7 | K2=−0. 71 |

x= 2. 038 f

D1= 0. 596 f

f =|R/2|= 719. 9

DEC2=−214. 851

DEC3= 399. 424

# F I G.12

| SCREEN | R1=-1000. 0 | D1= 439. 7 | K1= 0. 0 |
|---|---|---|---|
| CONCAVE MIRROR | R2=-1360. 6 | D2=-1000. 7 | K2= 0. 0 |

x= 1. 27f

D1= 0. 65f

f=|R/2|= 680

DEC2= 56. 939

DEC3= 550. 551

# F I G. 13

| SCREEN | R1= −575. 0 | D1= 477. 7 | K1= 0. 0 |
|--------|-------------|------------|----------|
| CONCAVE MIRROR | R2=−2023. 5 | D2=−419. 5 | K2= 0. 0 |

x= 1. 2 f

D1= 0. 472 f

f =|R∕2|=1011. 7

DEC2=−386. 537

DEC3= 295. 764

# F I G. 14

| SCREEN | R1=−1530. 0 | D1= 599. 5 | K1= 0. 0 |
|---|---|---|---|
| CONCAVE MIRROR | R2=−1590. 0 | D2=−1014. 0 | K2= 0. 0 |

x= 2. 13 f

D1= 0. 754 f

f=|R∕2|= 795. 0

DEC2= 214. 2

DEC3= 587. 0

# F I G.15

| SCREEN | R1= ∞ | D1= 138 | — |
|---|---|---|---|
| CONCAVE MIRROR | R2= 657 | D2= 475 | K2= 0 |

x= 2. 5 f

D1= 0. 4 f

$f=|R/2|=328$

DEC2= 16. 8

DEC3= 242. 7

# F I G.16

| SCREEN | R1=−1000. 0 | D1= 421. 9 | K1= 0. 0 |
|---|---|---|---|
| CONCAVE MIRROR | R2=−1440. 0 | D2=−990. 1 | K2= 0. 0 |

x= 1. 1 f

D1= 0. 589 f

f = |R/2|= 720

DEC2= 196. 735

DEC3= 658. 427

# F I G. 17

4 : OBSERVER' S EYE

3 : SECOND
CONCAVE MIRROR

30

1 : SCREEN

25

2 : FIRST
CONCAVE MIRROR

14 : DISPLAY UNIT

# F I G.18

2 : FIRST CONCAVE MIRROR

30

4 : OBSERVER' S EYE

3 : SECOND
CONCAVE MIRROR

1 : SCREEN

14 : DISPLAY UNIT

FIG.19

# F I G. 20

# F I G. 21

# F I G. 22

F I G. 23

F I G. 24

# F I G. 25

# F I G. 26

# F I G. 27

# F I G. 28

# F I G. 29

# F I G. 30

# F I G. 31

# F I G. 32

# F I G. 33

EP 0 664 477 A2

F I G. 34

# F I G. 35

# F I G. 36

# F I G. 37

# F I G. 38

# F I G. 39

# F I G. 40

11 : LENS

HORIZONTAL LINE
PASSING THROUGH
CENTER OF SCREEN

# F I G. 41A

# F I G. 41B

# F I G. 42

# F I G. 43

4

2

1

11 : LENS

HORIZONTAL LINE
PASSING THROUGH
CENTER OF SCREEN

# FIG. 44

# F I G. 45

4

3

2

HORIZONTAL LINE

1

5

11

6

# F I G. 46

# F I G. 47

F I G. 48